(19) Europäisches Patentamt
European Patent Office
Office européen des brevets

(11) **EP 3 001 101 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(51) Int Cl.:
*F21V 8/00* *(2006.01)*          *B29D 11/00* *(2006.01)*
*G02B 1/04* *(2006.01)*          *G02B 6/02* *(2006.01)*
*G02B 6/036* *(2006.01)*

(21) Anmeldenummer: **15182738.3**

(22) Anmeldetag: **27.08.2015**

(54) **FUNKTIONALISIERTE ELASTOMERE OPTISCHE STUFENINDEXFASER UND VERFAHREN ZUR HERSTELLUNG OPTISCHER STUFENINDEXFASERN**

FUNCTIONALIZED ELASTOMER STEP-INDEX OPTICAL FIBRE AND METHOD FOR PRODUCING STEP-INDEX OPTICAL FIBRES

FIBRE OPTIQUE A SAUT D'INDICE EN ELASTOMERE FONCTIONNALISE ET PROCEDE DE FABRICATION DE FIBRES OPTIQUES A SAUT D'INDICE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2014 DE 102014112512**

(43) Veröffentlichungstag der Anmeldung:
**30.03.2016 Patentblatt 2016/13**

(73) Patentinhaber: **Bundesrepublik Deutschland, vertreten durch den Bundesminister für Wirtschaft und Energie 12205 Berlin (DE)**

(72) Erfinder:
• **SIEBLER, Daniel**
**12205 Berlin (DE)**

• **ROHWETTER, Philipp**
**12205 Berlin (DE)**

(74) Vertreter: **Zimmermann & Partner Patentanwälte mbB Josephspitalstr. 15 80331 München (DE)**

(56) Entgegenhaltungen:
**EP-A2- 2 472 688          DE-A1- 10 145 945**
**JP-A- S6 155 611          JP-A- H01 319 003**
**US-A- 4 746 751          US-A- 4 867 531**
**US-A- 5 314 979          US-A1- 2002 186 921**
**US-A1- 2009 129 736          US-A1- 2010 280 184**

**Beschreibung**

Die vorliegende Erfindung betrifft funktionalisierte elastomere optische Lichtleitfasern (Lichtwellenleiter), insbesondere optische Stufenindexfasern, und Verfahren zur Herstellung derartiger Fasern.

**Hintergrund**

Die Erfindung bezieht sich vornehmlich auf Lichtwellenleitern und Lichtleitfasern, die beispielsweise eine sensorische Funktion erfüllen können, d.h. ihre Lichtleiteigenschaften unter dem Einfluss äußerer physikalischer oder chemischer Einwirkungen ändern bzw. unter Einwirkung physikalischer oder chemischer Einflüsse Licht erzeugen, das vom Lichtwellenleiter selbst weitergeleitet wird, und als Signal ausgewertet werden kann.

Optische Fasern, die primär zur Lichtübertragung über große Strecken dienen, werden aufgrund der guten Leichtleitungseigenschaften des Materials häufig auf Basis von Quarzglas hergestellt. Je nach den Eigenschaften des Faserkerns und des Fasermantels, d.h. der sogenannten Claddingschicht und Coatingschicht oder Coatingschichten, können optische Glasfasern bei höheren Temperaturen eingesetzt werden. Speziell bei größeren Durchmessern (z.B. $D > 125\ \mu$m) sind diese Fasern jedoch sehr biegesteif (wenig flexibel) und brechen leicht bei Krafteinwirkung, beispielsweise bereits bei einer Dehnung von ca. 1%.

Bei Glasfasern ist die Funktionalisierung des Faserkern- oder Claddingmaterials eingeschränkt möglich. Weit umfangreichere Optionen, durch Verwendung gezielt modifizierter Ausgangsmaterialien eine sensorische Funktion zu erzielen, bieten polymere optische Fasern (Polymer Optical Fiber, POF).

Kommerzielle optische Stufenindex- oder Gradientenindexfasern auf Polymerbasis, im Weiteren auch als POF (engl.: polymeric optical fiber) bezeichnet, die aus Polymeren wie z.B. Polymethylmethacrylat (PMMA), Polycarbonat (PC) oder Polystyrol (PS) durch Extrusion hergestellt werden, zeigen intrinsisch eine höhere optische Dämpfung als Glasfasern und werden daher in der Signaltechnik nur für kurze Übertragungsstrecken eingesetzt. Sie besitzen gegenüber Glasfasern den Vorteil, viel preiswerter und deutlich weniger biegesteif zu sein. Mit den erreichbaren großen Faserkerndurchmessern und numerischen Aperturen ermöglichen sie eine justageunempfindliche, hohe Einkoppeleffizienz. POF brechen oft erst ab einer Dehnung von ca. 10%, verformen sich jedoch auch bei geringeren Dehnungen plastisch und zeigen dann eine starke Zunahme der optischen Dämpfung an den zuvor gedehnten Stellen. Zusätzlich sind konventionelle POF aufgrund der niedrigen Schmelztemperaturen der zu Grunde liegenden Polymere nur für einen Temperaturbereich von max. ca. 60-100°C ausgelegt.

Es gibt kommerzielle funktionalisierte Plastikfasern speziell für sensorische Aufgaben, z.B. mit Fluoreszenzfarbstoffen dotierte Fasern als Lichtsammelfasern für Szintillationsdetektoren in der Hochenergiephysik. Farbstoffe werden in diesem Fall den Ausgangsmaterialien der Faser vor der Extrusion beigemischt. Die Farbstoffe werden durch die Polymermatrix ausreichend stark physikalisch immobilisiert, wodurch über lange Zeiträume keine signifikante Diffusion auftritt. Die konventionellen funktionalisierten POF unterliegen den gleichen Einschränkungen die thermische und mechanische Stabilität betreffend wie die nicht-funktionalisierten POF herkömmlicher Art.

Verfahren zur Herstellung von POF sind aus US 4 999 141 A, EP 1 116 577 A2, US 2009/0129736 A1, US 4 919 513 A, sowie T.A.C. Flipsen et al., "Polymer Optical Fiber with High Thermal Stability and Low Optical Loss Based on Novel Densely Crosslinked Polycarbosiloxanes", Journal of Applied Polymer Science, Band 67, Seiten 2223-2230 (1998) bekannt. DE 101 45 945 A1 beschreibt einen Lichtleiter mit einem Kern aus Silikongummi und Verfahren zu dessen Herstellung. EP 2 472 688 A2 beschreibt eine Hochspannungseinrichtung und verfahren zum Monitoring von Alterungsprozessen einer Isolierung in einer Hochspannungseinrichtung. US 2002/0186921 A1 beschreibt optische Multiwellenlängenfaservorrichtungen.US 4 867 531 A beschreibt eine optische Polymerfaser für die Verwendung in vivo, die einen biokompatiblen Polysiloxanfasermantel hat. JP H01 319003 A beschreibt die Herstellung einer optischen Faser mittels Koextrusion. US 4 746 751 A beschreibt siliconreaktive/fluoreszierende Silanfarbstoffzusammensetzungen.

Die US 4 999 141 A beschreibt einen Prozess zur Herstellung optischer Fasern durch Extrusion. Dieser Prozess erfordert ein Durchvernetzen in vergleichsweise sehr kurzer Zeit und damit den Einsatz sehr hoher Vernetzungstemperaturen bis ca. 300 °C. Dies kann für die Herstellung von Sensorfasern aus beispielsweise chemisch funktionalisierten Ausgangsstoffen eine schwerwiegende Einschränkung sein, wenn die funktionstragende Komponente temperaturinstabil ist. In dem in US 4 999 141 A beschriebenen Prozess wechselwirken unterschiedliche Prozessparameter miteinander. Dabei müssen die Materialien von Faserkern und Fasermantel eng aufeinander abgestimmt werden, um ein gleichzeitiges Aushärten zu sichern. Das kann dazu führen, dass Eigenschaften der zu produzierenden Faser nicht oder nur schwierig unabhängig voneinander gewählt werden können.

In der Druckschrift US 2010/0280184 A1 wird ein Verfahren zum nachträglichen und oberflächigen Funktionalisieren einer Lichtleitfaser beschrieben. Dort wird ein Teil der Faser zunächst einer Plasmabehandlung zur Erzeugung von reaktiven Gruppen unterworfen. Die reaktiven Gruppen werden dann in polymerisierbare Gruppen umgewandelt, damit in einem nachfolgenden Schritt eine weitere Polymerschicht mit Nachweismolekülen anpolymerisiert werden kann.

US 4 919 513 A beschreibt eine Faser aus einem elastomeren Faserkern und einem Fasermantel aus einem thermoplastischen oder duroplastischen Material.

In DE10145945A1 wird die Herstellung von Kunststofflichtwellenleitern aus vernetztem Silikongummi als lichtführendes Faserkernmaterial eines Lichtleiters beschrieben, wodurch eine höhere Einsatztemperatur und eine größere Dehnung resultieren als beim Einsatz konventioneller Kunstofflichtwellenleiter. Diese Lichtleiter sind besonders für die Informationsübertragung in Kurzstreckenanwendungen vorgesehen.

In "Dye-doped polysiloxane rubbers for luminescent solar concentrator systems", Optical Materials, 34, 1219-1224 von Buffa et al. werden dotierte Polysiloxane beschrieben.

**Kurzbeschreibung der Erfindung**

Es werden ein Verfahren zur Herstellung von elastomeren Lichtwellenleitern, insbesondere von Lichtleitfasern, nach Anspruch 1 sowie ein elastomerer Lichtwellenleiter nach Anspruch 11 bereitgestellt. Das Verfahren umfasst:

Bereitstellen eines Hohlkörpers mit mindestens einem, sich entlang einer ersten Richtung erstreckenden Hohlkanal;

Ausbilden eines Fasermantels in dem Hohlkanal durch Beschichten der Innenwand des Hohlkanals mit mindestens einer ersten unvernetzten, fließfähigen Elastomermischung unter Einwirkung einer in die erste Richtung wirkenden Kraft, wobei ein Hohlraum verbleibt, der von dem Fasermantel umgeben ist, und zumindest teilweisem Aushärten der Elastomermischung;

Ausbilden eines Faserkerns in dem Hohlraum durch Füllen des Hohlraums mit einer weiteren unvernetzten, fließfähigen Elastomermischung; und

Ausbilden eines Lichtwellenleiters aufweisend den Fasermantel und den Faserkern durch Aushärten des Fasermantels und des Faserkerns in dem Hohlkörper.

Das Verfahren gestattet eine einfache Herstellung eines vollständig elastomeren Lichtwellenleiters. Dabei können die einzelnen Prozessparameter zur Herstellung von Fasermantel und Faserkern praktisch unabhängig voneinander gewählt werden. Außerdem kann mit dem Verfahren eine hohe optische Qualität der Grenzfläche zwischen Faserkern und Fasermantel erreicht werden, da diese Grenzfläche eine innere Fläche während des Herstellungsprozesses ist.

Dies ist vorteilhafter im Gegensatz zu anderen Verfahren, in denen elastomere Faserkerne in einem thermo-/oder duroplastischen Tubus aus z.B. fluoriertem Polymermaterial hergestellt werden. Bei diesen Verfahren wird die Oberflächenqualität der hohlen, zylindrischen Form auf die Außenfläche des elastomeren Faserkerns wie bei einem Stempel übertragen. Dadurch resultiert in der Regel eine schlechte Lichtleitungseffizienz. Selbst wenn der Tubus unmittelbar als Fasermantel genutzt wird, d.h. der Faserkern wird nicht aus dem Tubus entfernt, können die unterschiedlichen mechanischen Eigenschafen von Faserkern und und thermoplastischem Fasermantel bei starker Dehnung oder Biegung zu Defekten durch Delaminierungen an der Grenzfläche Faserkern/Fasermantel führen. Solche Defekte führen unweigerlich zu einer ggf. drastisch reduzierten Lichtleiteffizienz. Dies kann durch das hier beschriebene Verfahren vermieden werden, da sowohl der Fasermantel als auch der Faserkern aus elastomeren Materialien mit beispielsweise sehr ähnlichen mechanischen Eigenschaften hergestellt werden können.

Ebenso unterscheidet sich das hier beschriebene Verfahren von Extrusionsverfahren. Die Extrusion von elastischen Thermoplasten zu optischen Fasern, die wie Thermoplasten einen Schmelzbereich besitzen aber zudem ein elastisches Verhalten zeigen, erlaubt zwar die Herstellung von optischen Fasern, die ausreichend gute optische oder mechanische Eigenschaften besitzen. Allerdings verfügen diese Fasern nicht über einen Fasermantel, da dieser nicht geeignet mitextrudiert werden kann. Dadurch ist die lichtleitende Funktion der Faser hochempfindlich gegenüber Störungen der optisch relevanten Oberfläche des freiliegenden Faserkerns beispielsweise durch Kontakt, Verschmutzung, Beschädigung, chemischer Angriff bzw. Degradation. Wird ein Fasermantel nachträglich auf einen vorproduzierten Faserkern aufgetragen werden, muss eine optisch perfekte Grenzfläche zwischen Faserkern und Cladding gewährleistet werden, damit der Fasermantel über eine rein mechanische Schutzfunktion hinaus auch wirklich die optische Funktion eines Claddings erfüllt.

Auch dieses Problem umgeht das hier beschriebene Verfahren, da der Lichtwellenleiter "invers" aufgebaut wird und die Grenzfläche im Hohlkanal geschützt ist. Deren Oberflächengüte kann beispielsweise durch die Oberflächenspannung des Materials des Fasermantels bestimmt werden, was durch entsprechende Verweilzeiten und/oder Topfzeiten eingestellt werden.

Daher erlaubt das hier beschriebene Verfahren die Herstellung von optischen Stufenindexfasern, bspw. Mehrmodenstufenindexfasern, mit einer oder mehreren unabhängig spezifizierbaren Mantelschichten, aus rein elastomeren Materialien. Das Verfahren erlaubt eine vollständig freie und unabhängige Wahl der geometrischen Parameter (bspw. der Schichtdicke der einzelnen Mantelschichten), bei weitestgehend frei wählbarer Vernetzungstemperatur und -geschwindigkeit. Das Verfahren kann prinzipiell auch eine Lichtinitiierte Vernetzung und/oder Aushärtung beinhalten. Das hier beschriebene Verfahren garantiert eine hohe Oberflächenqualität der Faserkern/Fasermantel-Grenzfläche und ermöglicht optional, einen Faseraufbau mit mehreren Mantelschichten.

Im Gegensatz zur DE10145945A1 werden in dem hier vorgestellten Verfahren eine einzelne oder mehrere Claddingschichten in den Hohlkörper eingeführt, wobei der Hohlkörper (Schlauch) nur zur Formgebung dient und im Anschluss entfernt wird. Durch das Verfahren können all-Silikon Multi-Stufenindexfasern hergestellt werden, deren Claddingmaterial(ien) und Faserkernmaterial eine chemische Bindung miteinander eingehen und zusätzlich mit z.B. Fluoreszenzfarbstoffen funktionalisiert sein können.

Das Verfahren gestattet weiterhin optische Fasern aus rein elastomerem Material herzustellen, die gleichzeitig für sensorische Anwendungen spezifisch funktionalisiert werden können und unter harschen Umweltbedingungen beständig sind.

Insbesondere optische Fasern aus Silikonelastomeren, die chemisch mit dem Ziel einer sensorischen Funktion modifiziert wurden, vereinigen alle Vorteile von herkömmlichen POF (aus thermoplastischen Polymeren), ohne die genannten Nachteile der thermoplastischen POF aufzuweisen. Ferner weisen sie zusätzliche günstige Eigenschaften im Sinne der Sensorik auf.

Der Herstellungsprozess kann insbesondere folgendes umfassen:

Die Faser kann in Schichten von außen nach innen aufgebaut werden. Eine zylindrische, mechanisch stabile hohle Hilfsmatrix wird mit dem transparenten, optional mit Farbstoffen dotierten oder funktionalisierten Elastomermaterial von innen beschichtet. Die Hilfsmatrix bildet den Hohlkörper.

Die äußerste Mantelschicht entsteht durch Benetzen der inneren Wandung (Innenwand des Hohlkanals) der Hilfsmatrix mit unvernetztem, fließfähigem Elastomer-Ausgangsmaterial, wobei sich spontan eine geschlossene Schicht mit homogener Schichtdicke und verschwindender Oberflächenrauigkeit der nach innen weisenden Oberfläche der aufgebrachten Schicht einstellt. Dies kann optional unter Schutzgas geschehen.

Das Benetzen der inneren Wandung des Hohlkanals durch das beispielsweise gleichförmige Absinken einer Säule des unvernetzten Elastomermaterials für die Bildung des Fasermantels oder einer der Mantelschichten des Fasermantels unter Einwirkung einer Kraft, die parallel zur Achse des Hohlkanals wirkt, führt zur Ausbildung der homogenen Mantelschicht. Die Kraft kann die Schwerkraft allein, aber auch die Kombination aus Schwerkraft und Zentifugalkraft in einem zentrifugenartigen Aufbau sein.

Gemäß einer Ausführungsform wird die in die erste Richtung wirkende Kraft durch die auf die erste fließfähige Elastomermischung wirkende Schwerkraft erzeugt, wobei der Hohlkörper dabei so gehalten wird, dass die Schwerkraft parallel zur ersten Richtung verläuft.

Gemäß einer Ausführungsform wird die in die erste Richtung wirkende Kraft durch Rotieren des Hohlkörpers um eine Rotationsachse, die nicht parallel zur ersten Richtung verläuft, erzeugt, sodass die Summe aller wirkenden Beschleunigungskräfte im Wesentlichen parallel zur ersten Richtung verläuft.

Gemäß einer Ausführungsform wird die in die erste Richtung wirkende Kraft entweder durch Erzeugen eines Unterdrucks erzeugt, welcher an einem Ende des Hohlkanals angelegt wird, oder durch Erzeugen eines Überdrucks, welcher am anderen Ende des Hohlkanals angelegt wird.

Die obigen Varianten zur Erzeugung der in die erste Richtung wirkenden Kraft können auch kombiniert werden, beispielsweise Schwerkraft und Unterdruck.

Das Einstellen der Schichtdicke erfolgt durch aufeinander Abstimmen z.B. der Viskosität des unvernetzten Fasermantelmaterials, der Oberflächeneigenschaften der Innenwand des Hohlkanals (insbesondere der Oberflächenenergie im Verhältnis zu der des elastomeren Fasermantelmaterials), der Temperatur, und der Größe der axial wirkenden Kraft. Diese Parameter können aber auch weitgehend unabhängig voneinander gewählt werden.

Ein bevorzugter Temperaturbereich liegt beispielsweise bei 15-25°C, da die Viskosität bei niedrigeren Temperaturen stark zunimmt. Bei Temperaturen über 30°C kann beispielsweise bei raumtemperaturvernetzenden Elastomermischungen keine gleichmäßige Schichtdicke des Claddings garantiert werden, da die Vernetzung beschleunigt wird und dadurch die Viskosität ebenfalls schnell zunimmt. Werden Elastomermischungen verwendet, die erst bei deutlich höheren Temperaturen vernetzen, kann das Aufbringen der Elastomermischingen auf bei Temperaturen oberhalb von 30°C erfolgen.

Das Material, aus dem der Hohlkörper besteht, kann sowohl hydrophobe als auch hydrophile Eigenschaften besitzen. Eine Benetzung der Elastomermischung, beispielsweise einer Silikonmischung, zu einem durchgehenden Film ist weitgehend unabhängig von der Art der Oberflächeneigenschaften des Materials des Hohlkörpers.

Die unvernetzte homogene Schicht von Fasermantelmaterial wird durch Herstellen geeigneter Bedingungen (z.B. Temperaturerhöhung oder Lichteinwirkung) erreicht. Optional können analog weitere konzentrische Mantelschichten mit optional unterschiedlichen oder gleichen optischen Eigenschaften, wie z.B. unterschiedlichen Brechungsindizes eingebracht werden. Die Wahl der Fasermantelmaterialien kann so erfolgen, dass beim Vernetzen der jeweils innersten Schicht eine chemische Verbindung zur vorangegangenen Schicht entsteht, sodass eine hohe mechanische Stabilität erreicht wird. Bevorzugt erfolgt daher ein zumindest teilweises Vernetzen der jeweils innersten, d.h. zuletzt aufgebrachten Schicht, bevor die nächste Schicht oder der Faserkern aufgebracht wird.

Das transparente, optional mit Farbstoffen dotierte/funktionalisierte oder anderweitig funktionalisierte elastomere Faserkernmaterial wird so gewählt, dass es typischerweise einen Brechungsindex aufweist, der größer ist als der der einen oder der mehreren Mantelschichten. Das Faserkernmaterial kann so gewählt werden, dass bei der Vernetzung eine chemische Verbindung zur innersten Mantelschicht entsteht.

Der Faserkern des Lichtwellenleiters wird abschließend durch vollständiges Auffüllen des verbleibenden gasgefüllten Volumens mit unvernetztem Faserkernmaterial und anschließendem Vernetzen desselben hergestellt.

Die fertig vernetzte Stufenindexfaser wird aus dem Hohlkanal beispielsweise durch Krafteinwirkung und gegebenenfalls unter Einsatz von Trennmittel oder durch Schmelzen oder Lösen des Hohlkörper z.B. in Wasser entformt.

Die thermischen und chemischen Eigenschaften der fertigen Lichtleitfaser oder Lichtwellenleiters werden im Wesentlichen durch die Ausgangsmaterialen, beispielsweise unvernetztes Silikonelastomer oder unvernetztes Elastomer, das in einer Thiol-ene Reaktion vernetzt wird, definiert. Andere Materialien bieten ggf. andere Vorzüge bzw. chemische Beständigkeiten. Optional kann das Material des Hohlkörpers spezifisch auf das Material des Lichtwellenleiters und der daran gekoppelten Sensor-Fluorophore angepasst werden.

Die hier beschriebenen flexiblen, funktionalisierten, elastomeren Stufenindexfasern, beispielsweise aus modifiziertem Silikonelastomer, gestatten insbesondere das Leiten von Licht in besonderer Weise und unter besonderen Bedingungen bei gleichzeitiger spezifischer Sensitivität für physikalische und/oder chemische Einflüsse. Insbesondere weisen die hier beschriebenen Lichtwellenleiter und Lichtleitfasern folgende Eigenschaften auf:

Erfüllung der Funktion eines Lichtwellenleiters mit extrem variabler Geometrie, insbesondere mit hoher Dehnbarkeit (ca. 70-100 % Reißdehnung).

Biegsamkeit, und Toleranz von Wechselbelastung, im Gegensatz zur "Erblindung" durch mikroskopische Schädigung von wiederholt gebogener POF aus z.B. PMMA.

Je nach Material Hochtemperaturtauglichkeit, beispielsweise bei Silikonen von bis zu 250°C, welche durch Wahl der Ausgangskomponenten spezifisch an den Verwendungszweck und Einsatzort angepasst werden kann.

Hohe chemische Beständigkeit in chemisch aggressiver Umgebung insbesondere bei Verwendung von Silikonelastomeren, da diese eine intrinsisch relativ hohe Stabilität von vernetztem Silikonelastomer aufweisen.

Optische Sensoren auch für Anwendungen, bei denen große Dehnungen auftreten.

Sammeln von Licht bestimmter Wellenlängen durch Dotierung oder Funktionalisierung mit angepassten Fluorophorsystemen. Im Fall der Silikonelastomere können die Farbstoffe kovalent angebunden werden, um eine Diffusion des Farbstoffs in der Matrix zu vermeiden.

Insbesondere bei der Verwendung von Silikonelastomeren werden verschiedene potentielle Anwendungen in der Sensorik eröffnet, da Silikonelastomere besondere Eigenschaften, beispielsweise hinsichtlich einer schnellen Diffusion von kleinen Molekülen (insbesondere Gasen) in der Silikonmatrix aufweisen. Damit stellen Silikonelastomere ein günstiges Trägermaterial z.B. für spezifisch sensitive Fluorophore dar. Als Beispiele können optische Gassensoren mit schneller Ansprechzeit oder Multikomponenten-Sensoren für die simultane Detektion von unterschiedlichen Spezies genannt werden.

Insgesamt wird durch das hier beschriebene Verfahren zur Herstellung von beispielsweise polymeren Stufenindexfasern eine weitgehend frei konfigurierbaren Anordnung von Faserkern und einer oder mehreren Mantelschichten aus elastomeren Materialien mit unterschiedlichen Brechungsindizes (insbesondere aus Silikonelastomeren) und mit optionaler unterschiedlicher Funktionalisierung ermöglicht, sodass die Grenzflächen angrenzender Materialschichten, insbesondere diejenige zwischen Faserkern und innerster Mantelschicht, optisch und mechanisch bestmögliche Qualität haben. Hiervon hängt die Funktion als Lichtwellenleiter entscheidend ab.

Günstig sind die Kombination von rein elastomerem Aufbau der optischen Faser mit einer sensorischen Funktionalisierung der verwendeten Materialien und die Möglichkeit, mehrere Mantelschichten herzustellen. Dabei gestattet der "inverse" Aufbau der Faser von außen nach innen in mehreren Schichten eine weitgehende Flexibilität bei der Gestaltung der elastomeren Faser.

Konkret kann beispielsweise das Faserkernmaterial mit fluoreszentem Farbstoff funktionalisiert werden, wodurch radial einfallendes Licht absorbiert und durch Fluoreszenz teilweise in geführte Moden reemittiert wird, was die Faser zu einem Lichtsammler macht. Dies kann bei hochspannungstechnischen Anwendungen eingesetzt werden.

Folgende bevorzugte Varianten und Abwandlungen sind denkbar:

Für die optische Faser (auch speziell aus Silikon): Vollständig elastomere Stufenindexfaser mit Funktionalisierung von Faserkern und/oder Fasermantelmaterial und mit einer oder mehreren Mantelschichten.

Speziell für Material Silikonelastomer: vollständig aus Silikonelastomer bestehende Stufenindexfaser mit kovalenter Anbindung der aneinander angrenzenden Schichten aus Faserkern und innerster Mantelschicht und/oder der aneinander grenzenden Mantelschichten.

Einsatz jeder Form von flüssigem bzw. fließfähigem Präpolymer oder Oligomer, das durch einen Härtungsprozess z.B. durch Kondensations- oder Additionsvernetzung, zu einem festen Polymer kreuzvernetzt werden kann.

Für das Herstellungsverfahren: Aufbau der Faser von außen nach innen in Schichten aus transparentem, optional mit Farbstoffen dotiertem oder anderweitig funktionalisiertem Material, in einer zylindrischen mechanisch stabilen hohlen Hilfsmatrix, welche den Hohlkörper bildet.

Erzeugung des Fasermantels durch Benetzen der inneren Wandung der Hilfsmatrix (Hohlkörpers) mit unvernetztem, fließfähigem Elastomer-Ausgangsmaterial, wobei sich spontan eine geschlossene Schicht mit homogener Schichtdicke und verschwindender Oberflächenrauigkeit einstellt. Dies kann optional unter Schutzgas geschehen.

Benetzen der inneren Wandung der Hilfsmatrix (Hohlkörpers) durch das gleichförmige Absinken einer Säule des unvernetzten Elastomermaterials für die erste und optional jede weitere Mantelschicht unter Einwirkung einer Kraft, die parallel zur Achse der Matrix wirkt. Dies kann die Schwerkraft allein, aber auch die Kombination aus Schwerkraft und Zentifugalkraft in einem zentrifugenartigen Aufbau sein.

Einstellen der Schichtdicke durch aufeinander Abstimmen z.B. der Viskosität der unvernetzten Elastomermischung, der Oberflächeneigenschaften der Innenwand des Hohlkanals (Hilfsmatrix) (insbesondere deren Oberflächenenergie im Verhältnis zu der des Mantelmaterials), der Temperatur, und der Größe der axial wirkenden Kraft.

Vernetzen der unvernetzten homogenen Schicht des Fasermantelmaterials durch Herstellen geeigneter Bedingungen, (die die Vernetzungsreaktion beschleunigen, z.B. Temperaturerhöhung oder Lichteinwirkung).

Optionales Einbringen einer beliebigen Anzahl konzentrischer Mantelschichten mit optional unterschiedlichen optischen Eigenschaften, wie z.B. unterschiedlichen Brechungsindizes und gegebenenfalls Farbstoffdotierungen. Wahl der Fasermantelmaterialien, sodass beim Vernetzen der jeweils innersten Schicht eine innige, mechanisch stabile Verbindung zur vorangegangenen Schicht entsteht.

Wahl des transparenten, optional mit Farbstoffen dotierten oder anderweitig funktionalisierten Faserkernmaterials, sodass es typischerweise einen Brechungsindex aufweist, der größer als der der einen angrenzenden oder der mehreren Mantelschichten ist.

Optionale Wahl des Faserkernmaterials, sodass bei der Vernetzung eine innige und mechanisch stabile Verbindung mit der innersten Mantelschicht entsteht.

Einbringen des Faserkerns durch abschließendes vollständiges Auffüllen des verbleibenden gasgefüllten Volumens mit unvernetztem Faserkernmaterial und anschließendes Vernetzen desselben.

Entformung der fertig vernetzten Stufenindexfaser aus der Hilfsmatrix durch Krafteinwirkung und gegebenenfalls unter Einsatz von Gleitmittel oder durch Schmelzen oder Lösen der Hilfsmatrix.

Insbesondere Elastomermischungen aus Silikonelastomeren können zur Anwendung kommen. Silikonelastomere werden bevorzugt mittels Übergangsmetallvermittelter Hydrosilylierungsraktion (Additionsreaktion) kreuzvernetzt, wobei sowohl einkomponentige als auch zweikomponentige Materialien zum Einsatz kommen können. Häufig werden Platin-basierende Katalysatoren (z.B. Karsteds Katalysator) eingesetzt, es sind aber auch andere Übergangsmetalle denkbar. Für die Hydrosilylierungsreaktion müssen Silikonkomponenten mit reaktiven Gruppen in Form von Hydriofunktionalitäten und ungesättigten Kohlenwasserstoffen (Alken oder Alkinfunktionalitäten, meist Vinylgruppen) vorliegen. Im Fall eines einkomponentigen Systems besitzt die Komponente beide Funktionalitäten, im Falle eines zweikomponentigem Systems besitzt eine Komponente die Hydrido- und die andere Komponente die Funktion mit Alken- oder Alkinrest. Der Katalysator kann bereits gelöst in einer Komponente vorliegen oder kann dem Reaktionsgemisch zugefügt werden.

Denkbar sind auch kondensationsvernetzende Silikonelastomere z.B. auf Basis eines Acetoxy- eines Oxim- eines Alkoxi-Systems bzw. eines Sn-katalysierten Systems.

Kondensationsvernetzende Silikone eignen sich bevorzugt für die Herstellung einer "Opferschicht" als erste bzw. äußere Mantelschicht. Hier ist die Absättigung der reaktiven Gruppen leicht zu realisieren, da nur ein Typ an reaktiven Gruppen vorliegt. Nach der Absättigung wird die chemische Anbindung einer zweiten Mantelschicht unterbunden, wodurch die Entfernung der ersten Mantelschicht leicht möglich sein sollte. Diese Absättigung kann beispielsweise durch eine einfache Methylierung oder Silanisierung mit verschiedenen monofunktionellen Silanen realisiert werden. Beispiele für Silanisierungsreagentien wäre Trimethylsilylchlorid, Trimethylsilyalkohol oder Hexamethyldisilazan bzw. andere monofunktionale Silylchloride oder Silylalkohole.

Die Silikone besitzen neben den reaktiven Gruppen für die Kreuzvernetzung gewöhnlich auch Siloxan-Wiederholungseinheiten (-O-Si(R)(R')-O-, $SiO_2R_2$) aus Dimethyl-(R=R'=Methyl = $CH_3$), Methylphenyl- (R= Methyl =$CH_3$, R'=Phenyl= $C_6H_5$) oder Diphenylsiloxan (R=R'=Phenyl=$C_6H_5$) oder Kombinationen dieser Bestandteile. Es sind jedoch auch andere Reste wie kondensierte Aromaten, fluorierte Kohlenwasserstoffe oder aliphatische Kohlenwasserstoffe denkbar.

Die Funktionalisierung mit Nachweismolekülen ist von den reaktiven Gruppen zum Aufbau des Silikonelastomers zu unterschieden. Die reaktiven Gruppen dienen der Vernetzung der Ausgangskomponente der Silikonelastomere. Eine oder mehrere Ausgangskomponenten können dann zusätzlich die Nachweismoleküle tragen.

Die vorstehend beschriebenen Ausführungsformen können beliebig miteinander kombiniert werden. Die Begriffe Lichtwellenleiter, Lichtleitfaser oder einfach Faser werden synonym verwendet.

## Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugzeichen bezeichnen entsprechend ähnliche Teile.

Figuren 1A bis 1E zeigen ein Verfahren zur Herstellung eines Lichtwellenleiters gemäß einer ersten Ausführungsform;

Figuren 2A bis 2E zeigen ein Verfahren zur Herstellung eines Lichtwellenleiters gemäß einer zweiten Ausführungsform;

Figur 3 zeigt ein konkretes Beispiel eines Lichtwellenleiters gemäß einem Ausführungsbeispiel;

Figur 4 zeigt ein Schema eines Messaufbaus zur Messung der Dämpfungseigenschaften von Lichtwellenleitern;

Figuren 5A und 5B zeigen ein konkretes Beispiel eines Lichtwellenleiters gemäß einem Ausführungsbeispiel;

Figur 6 zeigt ein weiteres konkretes Beispiel eines Lichtwellenleiters gemäß einem Ausführungsbeispiel;

Figur 7 zeigt Messungen der Oberflächenrauhigkeit einer Faserkern-Fasermantel Grenzfläche bei einem gemäß einem Ausführungsbeispiel hergestellten Lichtwellenleiter;

Figur 8 zeigt Dämpfungsmessungen an einem Lichtwellenleiter gemäß einer Ausführungsform;

Figur 9 zeigt Dämpfungsmessungen an einem kommerziell erhältlichen Lichtwellenleiter; und

Figur 10 zeigt zum Vergleich Dämpfungsmessungen an einem Lichtwellenleiter, der von innen nach außen hergestellt wurde.

## Ausführungsbeispiele

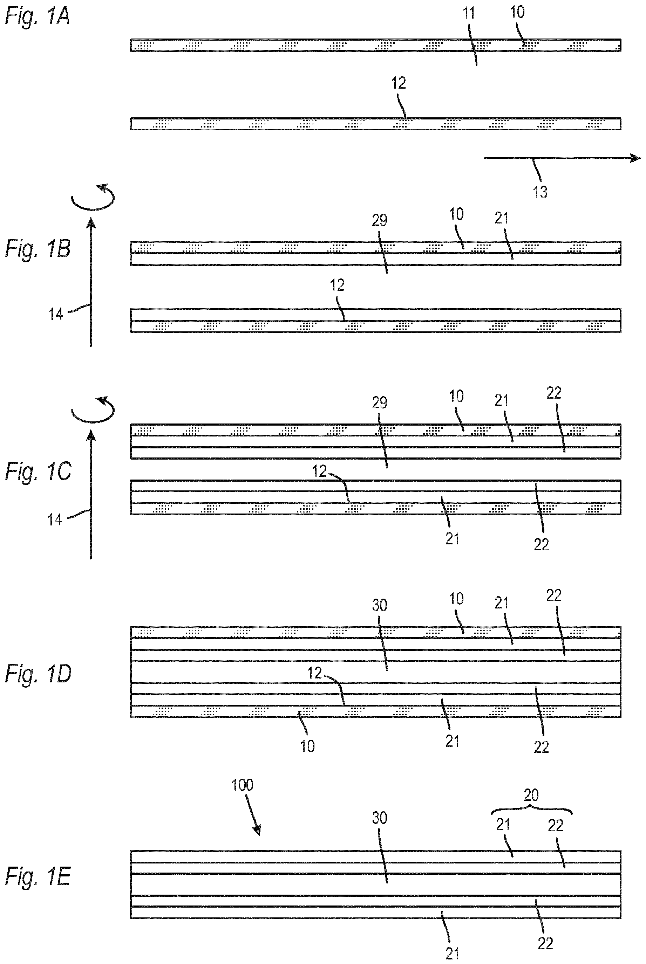

Figur 1A zeigt einen Hohlkörper 10, der einen Hohlkanal 11 mit Innenwand 12 aufweist, welcher sich in Längsrichtung des Hohlkörpers 10 erstreckt. Der Hohlkanal 11 verläuft hier in eine erste Richtung 13.

Der Hohlkörper 10 kann aus einem beliebigen Material bestehen, beispielsweise einem Kunststoffmaterial, wachsartigen Materialien, aus einem Metall oder Glasfaserkunstoff. Das Material des Hohlkörpers 10 sollte den bei der Herstellung auftretenden Temperaturen widerstehen.

Der Hohlkörper 10 kann beispielsweise aus zwei Halbschalen bestehen, welche im zusammengefügten Zustand den Hohlkanal 11 definieren.

Die Innenwand 12 des Hohlkanals 11 kann weiterhin passiviert sein, um eine kovalente Anbindung des Materials des Fasermantels zu unterbinden. Zur Passivierung kann die Innenwand 12 beispielsweise mit einer hydrophoben Schicht oder Folie, beispielsweise aus Polytetrafluorethylen (PTFE), beschichtet oder belegt sein. Die Passivierung kann damit die Funktion einer Opferschicht übernehmen, um eventuelle Oberflächenrauigkeiten der Innenwand 12 auszugleichen.

Beispielsweise kann eine Folie aus PTFE oder einem anderen geeigneten Material durch Tiefziehen in den Hohlkanal 11 eingebracht und dort die Innenwand glatt belegen. Die Folie erleichtert dann später das Entformen des hergestellten Lichtwellenleiters aus dem

Der Hohlkörper 10 kann beispielsweise rohrförmig oder zylindrisch sein. Der Hohlraum 12 hat typischerweise einen kreisförmigen Querschnitt, kann aber auch einen anderen Querschnitt aufweisen.

Alternativ kann der Hohlkörper 10 aus einem thermoplastischen Material bestehen, dass abschließend zum Entformen aufgeschmolzen wird. Ebenso ist es möglich, den Hohlkörper 10 aus einem Wachsmaterial herzustellen. Der Hohlkörper kann auch aus einem Polymer bestehen, welches durch geeignete Lösungsmittel aufgelöst werden kann.

Der Hohlkörper 10 kann auch aus einem Verbundwerkstoff bestehen. Beispielsweise kann die Innenseite des Hohlkörpers 10 mit einer Wachsschicht beschichtet sein, welche die Innenwand 12 bildet. Dadurch ist es möglich, durch abschließendes Aufschmelzen der Wachsschicht den im Hohlkörper 10 hergestellten Lichtwellenleiter zu entnehmen, ohne den Hohlkörper 10 zu zerstören.

In einem weiteren Prozessschritt wird ein Fasermantel 20 in dem Hohlkanal 11 durch Beschichten der Innenwand 12 des Hohlkanals 11 mit mindestens einer ersten unvernetzten, fließfähigen Elastomermischung unter Einwirkung einer in die erste Richtung wirkenden Kraft hergestellt. Dazu wird beispielsweise in der Figur 1B von links eine Elastomermischung in den Hohlkanal 11 gegeben. Zur gleichmäßigen Benetzung der inneren Oberfläche kann der Hohlkörper 10 um eine Drehachse gedreht werden, die koaxial zur Achse des Hohlkanals 11 ist. Diese Drehung ist in Figur 1B nicht gezeigt und unterscheidet sich von der nachfolgend beschriebenen Rotation.

Durch Rotieren des Hohlkörpers 10 um eine Rotationsachse 14, die nicht parallel zur ersten Richtung 13 verläuft, wird eine Kraft erzeugt, die im Wesentlichen parallel zur ersten Richtung 13 verläuft. Treten mehrere Drehbewegungen auf, sollte die Summe aller wirkenden Beschleunigungskräfte im Wesentlichen parallel zur ersten Richtung 13 verlaufen.

Betragsmäßig ist die mittels der Rotation um die Rotationsachse 14 erzeugte und auf die erste Elastomermischung wirkende Kraft deutlich größer als die mittels der Drehbewegung um die Längsachse des Hohlkanals 11 erzeugte und auf die erste Elastomermischung wirkende Kraft, beispielsweise um mindestens den Faktor 2, bevorzugt um mindestens den Faktor 3, bevorzugt um mindestens den Faktor 5, und mehr bevorzugt um mindestens den Faktor 10. Dadurch wird sichergestellt, dass überschüssiges Elastomermaterial aus dem Hohlkanal 11 durch die Fliehkraft entfernt wird. Die erste Richtung 13, welche sich in axialer Richtung oder Längserstreckung des Hohlkanals 11 verläuft, rotiert dabei mit, sodass die Fliehkraft immer in die erste Richtung 13 wirkt. Das überschüssige Elastomermaterial wird damit herausgeschleudert.

Das Material der ersten Elastomerschicht benetzt die Innenwand 12 gleichmäßig, was durch die Drehbewegung unterstützt werden kann. Dabei bildet sich eine homogene Schicht mit einer weitgehend homogenen Dicke heraus.

Als Elastomermischung wird insbesondere eine Mischung zur Bildung eines Silikonelastomers verwendet.

Die Dicke des die Innenwand 12 benetzenden Materials der ersten Elastomermischung kann insbesondere über die Größe der in die erste Richtung 13 wirkenden Kraft, die Viskosität der ersten Elastomermischung, und die Oberflächeneigenschaften der Innenwand 12 und deren Benetzbarkeit durch die erste Elastomermischung eingestellt werden. Damit kann die Dicke der so zu bildenden ersten Mantelschicht 21 des Fasermantels 20 unabhängig von Materialeigenschaften der weiteren Schichten eingestellt werden.

Insbesondere die Kraft längs der ersten Richtung 13 und die Viskosität der Elastomermischungen lassen sich leicht einstellen und bieten daher ausreichend Raum für eine genaue Anpassung der Eigenschaften der einzelnen Schichten.

Bei der Bildung des Fasermantels 20, bzw. der ersten Mantelschicht 21, verbleibt ein Hohlraum 29, der vom Fasermantel 20 bzw. der ersten Mantelschicht 21 umgeben ist.

In einem weiteren Prozessschritt wird das die Innenwand 12 benetzende Material der ersten Elastomerschicht mindestens teilweise, bevorzugt jedoch nicht vollständig ausgehärtet. Diese Aushärtung kann beispielsweise bei erhöhter Temperatur und/oder unter Lichteinwirkung erfolgen.

Unter dem Begriff Aushärtung soll hier sowohl eine Quervernetzung, eine Polykondensation, als auch eine Polyaddition der in der ersten und jeder weiteren Elastomermischung enthaltenen Komponenten verstanden werden.

Insbesondere die Aushärtung des Fasermantels kann die obigen Reaktionen umfassen, da beispielsweise die bei einer Polykondensation entstehenden flüchtigen Komponenten leicht durch den noch verbliebenen Hohlraum 29 aus dem sich bildenden Fasermantel bzw. dessen einzelnen Mantelschichten entweichen können.

Die weiter unten beschriebene Aushärtung des Faserkerns bevorzugt eine Polyaddition, da hier keine zu entweichenden Komponenten gebildet werden und somit nicht durch den Faserkern herausdiffundieren müssen. Jedoch ist die Aushärtung des Faserkerns nicht auf eine Polyaddition beschränkt, sondern kann auch eine Polykondensation umfassen.

Ob die Aushärtung der einzelnen Funktionsschichtung eine Polyaddition oder Polykondensation ist, hängt von den zu vernetzenden Komponenten der jeweiligen Elastomermischungen ab und kann daher geeignet gewählt werden. Damit ist eine gute Prozessanpassung möglich. Unter Funktionsschicht werden hier insbesondere die Schicht oder Schichten (Mantelschichten) des Fasermantels und des Faserkerns verstanden.

Die Aushärtung der jeweiligen Funktionsschicht erfolgt bevorzugt so, dass die jeweils zuletzt ausgehärtete Funktionsschicht eine ausreichende mechanische Stabilität aufweist, damit die nächste Funktionsschicht aufgetragen werden kann. Günstig ist es, wenn die jeweils zuletzt erzeugt Funktionsschicht nicht vollständig ausgehärtet ist, damit eine kovalente Anbindung der nachfolgend aufzubringenden Funktionsschicht möglich ist. Dadurch können die einzelnen Funktionsschicht kovalent aneinander gebunden sein, was sich vorteilhaft auf die mechanischen und chemischen Eigenschaften des Lichtwellenleiters auswirkt.

In einem weiteren Prozessschritt wird in dem von der ersten Mantelschicht 21 umschlossenen Hohlraum 29 nach teilweiser Aushärtung des Materials der ersten Mantelschicht 21 eine zweite Elastomermischung eingebracht, welche ebenfalls einer in die erste Richtung 13 wirkenden Kraft unterworfen wird. Dabei benetzt die zweite Elastomermischung die Innenwand der ersten Mantelschicht 12. Dies ist in Figur 1C dargestellt.

Die zweite Elastomermischung kann beispielsweise eine andere Viskosität als die der ersten Elastomermischung aufweisen, um so eine von der Dicke der ersten Mantelschicht 21 verschiedene Dicke der durch die zweite Elastomerschicht gebildeten zweiten Mantelschicht 22 bei ansonsten gleichen Prozessbedingungen einzustellen. Alternativ kann auch die Rotationsgeschwindigkeit variiert werden.

Die erste und zweite Elastomermischung unterscheiden sich typischerweise auch in ihrer Zusammensetzung, sodass die erste und zweite Mantelschicht unterschiedliche optische Eigenschaften aufweisen. Bevorzugt ist der Brechungsindex des Materials der zweiten Mantelschicht 22 größer als der Brechungsindex des Materials der ersten Mantelschicht 21.

Bevorzugt sind jedoch die mechanischen Eigenschaften der beiden Mantelschichten 21, 22 gleich, damit eine mechanische Beanspruchung des Lichtwellenleiters nicht zu einer Beschädigung des Lichtwellenleiters führt.

Die gebildete zweite Mantelschicht 22 wird ebenfalls einer Aushärtung unterworfen, wobei dabei eine kovalente Anbindung an die erste Mantelschicht 21 erfolgt.

Es können bedarfsweise weitere Mantelschichten aufgebracht werden und ausgehärtet werden. Der Fasermantel 20 umgibt den verbleibenden Hohlraum 29, in welchem nachfolgend der Faserkern ausgebildet wird. Die einzelnen Mantelschichten 21, 22 bilden zusammen den Fasermantel 20. Dieser kann nur eine Mantelschicht aufweisen, oder zwei Mantelschichten 21, 22, wie in den Figuren 1A bis 1E gezeigt. Es ist auch möglich, dass der Fasermantel drei, vier oder noch mehr Mantelschichten aufweist.

In einem weiteren in Figur 1D dargestellten Prozessschritt wird ein Faserkern 30 in dem Hohlraum 29 durch Füllen des Hohlraums 29 mit einer weiteren unvernetzten, fließfähigen Elastomermischung gebildet. Dieser Prozessschritt kann ohne Einwirkung einer zusätzlichen Kraft erfolgen, da hier der Hohlraum 29 vollständig gefüllt bleiben soll. Die Komponenten der weitere Elastomerschicht und/oder deren relative Zusammensetzung unterscheiden sich typischerweise von denen der ersten und zweiten Elastomermischung, um insbesondere die optischen Eigenschaften des aus dem Material der weiteren Elastomerschicht gebildeten Faserkerns 30 anzupassen.

Mit einer abschließenden Aushärtung wird der Faserkern 30 fertiggestellt.

Bei jeder Aushärtung erfolgt auch eine weitere Aushärtung der bereits früher hergestellten Funktionsschichten, sodass eine praktisch vollständige Aushärtung der einzelnen Funktionsschichten vorliegt.

In einem weiteren Prozessschritt, gezeigt in Figur 1E, wird der Hohlkörper 10 entfernt, beispielsweise durch Aufschmelzen, Auflösen oder Auftrennen, wie bereits weiter oben beschrieben, um den Lichtwellenleiter 100 bzw. die Lichtleitfaser 100 zu entformen. Ggf. kann der Lichtwellenleiter 100 gereinigt werden, um eventuell verbliebene Reste des Materials des Hohlkörpers 10 zu entfernen.

Die obigen einzelnen Prozessschritte können unter einer Schutzgasatmosphäre, beispielsweise einer inerten Atmosphäre, durchgeführt werden. Insbesondere ist ein Durchströmen des Hohlraums 29 mit einem Schutzgas bei der Aushärtung von Vorteil, um dabei eventuell gebildete flüchtige Substanzen abtransportieren zu können.

Die erste und die zweite Elastomermischungen können unterschiedliche Polymere und/oder Oligomere und/oder Dimere und/oder Monomere enthalten und/oder sich in der Anzahl der funktionellen Gruppen unterscheiden.

Die erste Elastomermischung und/oder die zweite Elastomermischung und/oder die weitere Elastomermischung können Polymere und/oder Oligomere und/oder Dimere und/oder Monomere enthalten, welche reaktive Gruppen für eine Polyaddition der Polymere und/oder Oligomere und/oder Dimere und/oder Monomere aufweisen.

Die Polymere und/oder Oligomere und/oder Dimere und/oder Monomere können funktionalisiert sein, beispielsweise mit kovalent gekoppelten Nachweißmolekülen, welche ihre optischen Eigenschaften bei Änderungen von physikalischen und/oder chemischen und/oder physikochemischen Einflüssen ändern. Beispielsweise können Fluorophore, d.h. Fluoreszenz- oder Phosphoreszenzfarbstoffe, kovalent an die Komponenten der einzelnen Elastomermischungen gekoppelt sein, sodass diese Fluorophore dann auch kovalent an das Elastomermaterial der jeweiligen Funktionsschicht gekoppelt sind.

Durch diese kovalente Kopplung wird eine Diffusion der Fluorophore in den Funktionsschichten unterbunden, im Gegensatz zu den bei thermoplastischen Fasern lediglich eingebetteten Fluorophoren. Damit wird die Langzeitstabilität deutlich verbessert.

Bei den Fluorophoren kann es sich um auf verschiedenen Umwelteinflüsse empfindliche organische oder anorganische Substanzen handeln.

Mindestens eine der Funktionsschichten ist bevorzugt mit Nachweißmolekülen funktionalisiert. Beispielsweise kann nur der Faserkern 30 oder der Fasermantel 20, oder nur eine der Mantelschichten 21, 22 des Fasermantels 20 funktionalisiert sein. Es ist auch möglich, zwei Funktionsschichten, beispielsweise sowohl den Faserkern 30 und eine der Mantelschichten 21, 22, oder nur die zwei Mantelschichten, zu funktionalisieren. Dabei kann die Funktionalisierung der einzelnen Funktionsschichten unterschiedlich sein.

Zur Verbesserung der Oberflächeneigenschaften der äußeren Mantelschicht kann gemäß einer Ausführungsform eine Opferschicht an der Innenwand 12 aufgebracht sein. Diese kann beispielsweise ebenfalls aus einem Elastomer oder auch aus einem thermoplastischen oder duroplastischen Material bestehen. Die Opferschicht dient dazu, eventuelle Oberflächenrauigkeiten der Innenwand 12 auszugleichen und/oder eine definierte chemische Oberfläche für das Auftragen der ersten Mantelschicht 21 bereitzustellen. Es ist günstig, wenn die Opferschicht passiviert ist, damit keine kovalente Anbindung der ersten Mantelschicht 21 an die Opferschicht erfolgt und diese dann abschließend leichter entfernt werden kann.

Die Opferschicht kann beispielsweise durch eine Schicht gebildet werden, welche eine Oberflächenbeschichtung der Innenwand 12 des Hohlkanals 11 darstellt. Die Opferschicht kann analog dem Verfahren zur Ausbildung der ersten Mantelschicht 21 aus einer additionsvernetzenden oder vorzugsweise kondensationsvernetzenden Elastomermischung erfolgen, d.h. unter der oben beschriebenen Kraftwirkung. Nach dem Vernetzen der Opferschicht kann eine Passivierung der durch die Opferschicht gebildeten Oberflächenbeschichtung durch Absättigung eventuell verbleibender oberflächlichenreaktiver Gruppen mit einem geeigneten Reaktionspartner erfolgen. Die erste Mantelschicht 21 wird dann auf der passivierten Oberflächenbeschichtung der Innenwand 12 des Hohlkanals 11 ausgebildet, wobei die erste Mantelschicht 21 nach Abschluss der weiteren Verfahrensschritte mechanisch von der Opferschicht leicht abgelöst werden kann.

Die Oberfläche der ersten Mantelschicht 21 erhält durch die zuvor gebildete Opferschicht eine hohe, von der Oberflächenqualität der Innenwand 12 des Hohlkanals 11 im Wesentlichen unabhängige optische Qualität. Dies ist von besonderem Vorteil.

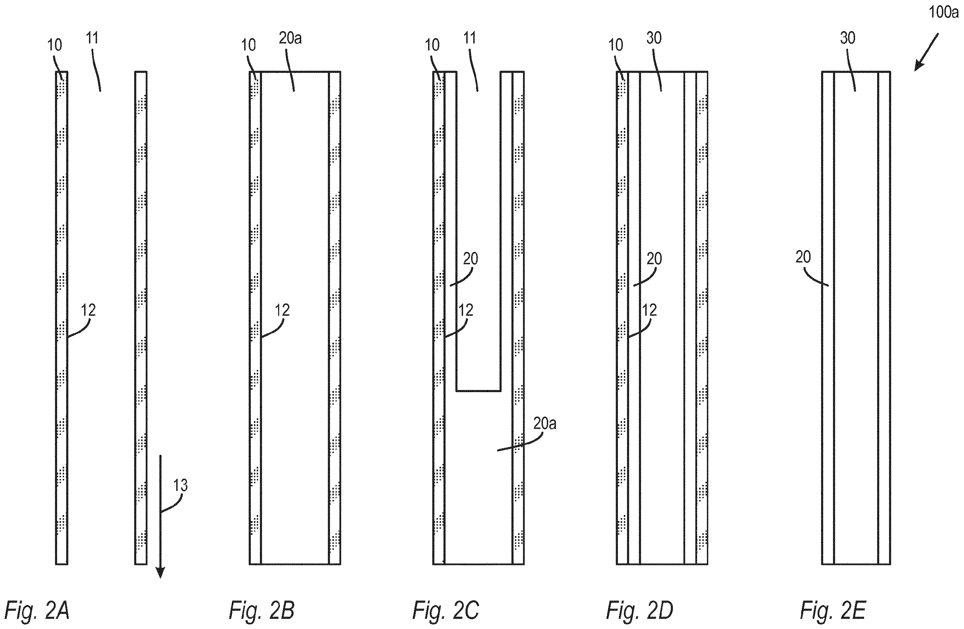

Figuren 2A bis 2E zeigen eine weitere Ausführungsform. Hier wird, im Unterschied zur Ausführungsform der Figuren 1A bis 1E, die in die erste Richtung weisende Kraft im Wesentlichen durch die Schwerkraft erzeugt, wobei der Hohlkörper 10 dabei so gehalten wird, dass die Schwerkraft parallel zur ersten Richtung 13 verläuft. Der Hohlkanal 11 ist daher im Wesentlichen senkrecht orientiert.

Der Hohlkanal 11 wird in einem Prozessschritt, gezeigt in Figur 2B, zunächst vollständig mit einer Elastomermischung 20a gefüllt und benetzt damit gleichmäßig die Innenwand 12 des Hohlkanals 11. Dann wird die Elastomermischung 20a abgelassen, sodass an der Innenwand 12 lediglich eine Schicht 20 verbleibt, welche später den Fasermantel 20 bildet. Die Dicke der Schicht 20 hängt insbesondere von der Viskosität der Elastomermischung ab.

Figur 2C zeigt einen Zustand mit halbentleertem Hohlkanal 11.

Nach einer mindestens teilweisen Aushärtung des Fasermantels 20 wird der verbliebende und von dem Fasermantel 20 umschlossene Hohlraum mit einer weiteren Elastomermischung gefüllt und diese ausgehärtet. Dabei entsteht der kovalent an den Fasermantel 20 gekoppelte Faserkern 30. Dies ist in Figur 2D gezeigt.

Abschließend erfolgt wieder eine Entformung des so gebildeten Lichtwellenleiters 100a, die in dieser Ausführungsform nur einen Fasermantel 20 mit einer Mantelschicht aufweist. Dies ist in Figur 2E gezeigt. Der Fasermantel 20 kann jedoch auch bei dieser Ausführungsform zwei, drei oder mehrere Mantelschichten aufweisen.

Es können die bereits oben beschriebenen Materialien verwendet werden. Deren Aushärtung und Funktionalisierung kann wie weiter oben erfolgen.

Alternativ kann die in die erste Richtung 13 wirkende Kraft entweder durch Erzeugen eines Unterdrucks erzeugt werden, welcher an einem Ende des Hohlkanals 11 angelegt wird, oder durch Erzeugen eines Überdrucks erzeugt werden, welcher am anderen Ende des Hohlkanals 11 angelegt wird.

Der Hohlkörper 10 muss nicht notwendigerweise entfernt werden, sondern kann beispielsweise nur teilweise oder gar nicht entfernt werden.

Durch die hier beschriebenen Verfahren ist es möglich, elastomere Lichtwellenleiter, insbesondere elastomere Lichtleitfaser, herzustellen. Diese umfassen mindestens einen Faserkern 30 aus einem elastomeren Material, und mindestens einen Fasermantel 20 aus einem elastomeren Material, wobei das elastomere Material des Faserkerns 30 und/oder des Fasermantels 20 mit Nachweismolekülen funktionalisiert sein kann.

Das elastomere Material des Faserkerns 30 und/oder des Fasermantels 20 kann insbesondere ein Silikonelastomer sein.

Die Nachweismoleküle können insbesondere Fluoreszenzfarbstoffe und/oder pH sensitive Farbstoffe und/oder Gas-sensitive Farbstoffe und/oder Szintillatorstoffe ein.

Als Siloxanmaterialien eignen sich alle transparenten additionsvernetzenden, beispielsweis bei Raum- und/oder Hochtemperatur vernetzenden Siloxane. Im Folgenden werden einige kommerziell erhältliche Siloxansysteme genannt, die sich als Faserkern und/oder Fasermantelmaterial eignen. Diese Aufzählung legt jedoch keinen Wert auf Vollständigkeit aller am Markt erhältlichen Materialien. Für die Funktionalisierung eignen sich die Wacker Siloxane: LR 7665, LR 7600, RT 601, RT 604 (Wacker Chemie AG, Deutschland), die Dow Corning Siloxane: OE6630, OE6636, OE6550, OE6520 (Dow Corning Inc., USA), die Momentive Produkte: RTV 655, RTV 615 (Momentive Performance Materials Inc, USA) und die NuSil Materialien LS6257, LS6143, LS6943 (NuSil Technology LLC, USA).

Als Kernmaterialien eignen sich besonders Silikone mit einer geringen intrinsischen optischen Dämpfung (höchste Transparenz über einen weiten Wellenlängenbereich z.B. 300-1600 nm, bevorzugt 350-800 nm) und einer großen numerischen Apertur (>= 1.43). Silikone mit Reißdehnungen > 100 % und > 4 N/mm sind wünschenswert für ein breites Anwendungsfeld.

Als Claddingmaterial (Material für den Fasermantel) eignen sich besonders bei Raumtemperatur vernetzende Systeme. Diese können, müssen jedoch nicht hochtransparent sein.

Als UV-vernetzende elastomere Materialien können neben UV-aktivierbaren additionsvernetzenden Silikonen wie z.B. Wacker ELASTOSIL Solar 2120 UV auch Systeme eingesetzt werden, die in einer UV aktivierbaren Reaktion reagieren (z.B. Thio-Click Reaktion). Besonders eignen sich die NOA Materialien von Norland Products Inc., USA, besonders bevorzugt NOA 61, NOA 65, NOA 85, NOA 1375.

**Beispiel 1: Herstellung einer Stufenindexfaser aus Silikon mittels Temperaturvernetzung, Cladding RT601, Faserkern OE6636**

Wacker RT601 A+B wurde im Verhältnis 9:1 gemischt und im Hochvakuum von Lufteinschlüssen befreit. Anschließend wurden 5 g RT601 in einer 10 ml Spritze aufgezogen und 2 ml in einen senkrecht hängenden und 1,5 m langen PTFE Schlauch (Carl Roth, Deutschland) mit 2 mm Innendurchmesser gegeben. Nach Absinken der flüssigen Silikonsäule im PTFE Schlauch, war der Schlauch im Inneren von RTV655 benetzt (Schichtdicke ca. 0,2 mm). Das Silikon wurde bei Raumtemperatur über 4 Stunden vernetzt, bevor mit dem Einfüllen eines gefilterten vorgemischten Silikons als Faserkernmaterial aus 10 g der Siloxanmischung OE6636 (Dow Corning, Mischung der Komponenten A:B im Verhältnis 1:2) begonnen wurde. Der Schlauch wurde komplett aufgefüllt und anschließend je 2h bei 80°C, 100°C und 120°C vernetzt, d.h. 2h bei 80°C, dann 2h bei 100°C und dann 2h bei 120°C. Anschließend wurde der PTFE Schlauch entfernt, wodurch eine komplett aus Silikon bestehende elastomere optische Lichtleitfaser zurück blieb.

**Beispiel 2: Herstellung einer funktionalisierten Stufenindex aus Silikon mittels Temperaturvernetzung, Cladding RT601, Faserkern OE6636 + 50ppm Farbstoff F4, interne Bezeichnung: F15_013**

Wacker RT601 A+B wurde im Verhältnis 9:1 gemischt und im Hochvakuum von Lufteinschlüssen befreit. Anschließend wurden 5 g RT601 in einer 10ml Spritze aufgezogen und 2 ml in einen senkrecht hängenden und 1,5 m langen PTFE Schlauch (Carl Roth, Deutschland) mit 2 mm Innendurchmesser gegeben. Nach Absinken der flüssigen Silikonsäule im PTFE Schlauch, war der Schlauch im Inneren von RT601 benetzt (Schichtdicke ca. 0,2 mm). Das Silikon wurde bei Raumtemperatur über 4 Stunden vernetzt, bevor mit dem Einfüllen eines gefilterten vorgemischten Silikons als Faserkernmaterial aus 10 g OE6636 und 50 ppm grünem Fluoreszenzfarbstoff F4 begonnen wurde. Der Fluoreszenzfarbstoff ist ein funktionalisierter Farbstoff auf Basis eines Coumarinfarbstoffs von FEW Chemicals GmbH Deutschland (S2153). Der Fluoreszenzfarbstoff wurde während des Vernetzungsprozesses des Silikons kovalent an das Silikongerüst gebunden. Der Schlauch wurde komplett aufgefüllt und anschließend je 2h bei 80°C, 100°C und 120°C vernetzt. Anschließend wurde der PTFE Schlauch entfernt, wodurch eine komplett aus Silikon bestehende fluoreszierende elastomere optische Lichtleitfaser (interne Bezeichnung F15_013) von 1,08 m Länge mit einem Faserdurchmesser von 2 mm zurück blieb.

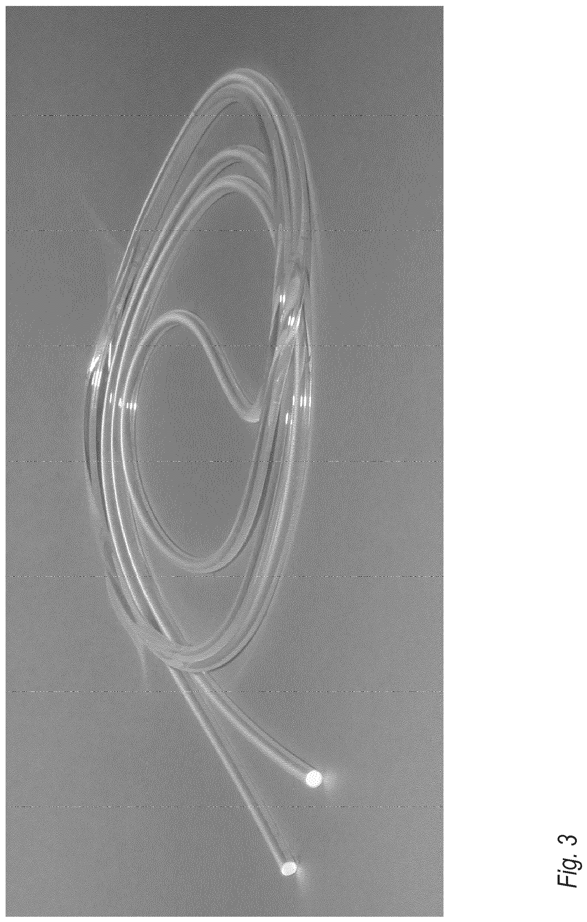

Figur 3 zeigt ein Foto der Silikonfaser F15_013 mit Faserdurchmesser von 2 mm, 50 ppm Farbstoff F4 im Faserkernmaterial OE6636, und dem Fasermantelmaterial RT 601 ohne Dotierung.

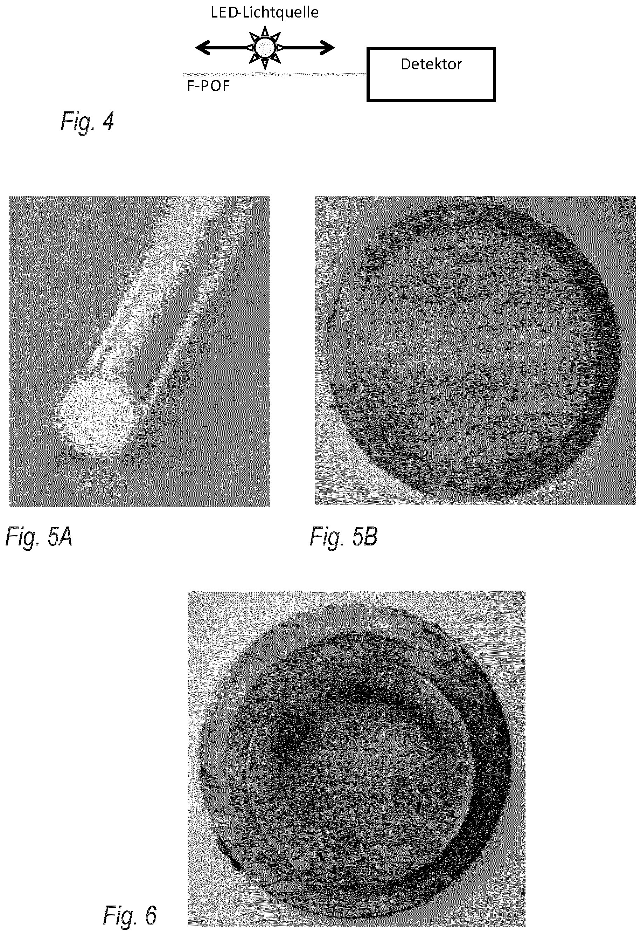

Figur 5A zeigt ein Foto der Endfläche der Silikonfaser F15_013, und Figur 5B eine Mikroskopieaufnahme der gleichen Faser.

Die Dämpfung der Faser wurde mittels seitlicher Lichteinkopplung bestimmt nach Kruhlak, R.J. and Kuzyk, M.G., "Side-illumination fluorescence spectroscopy. II. Applications to squarainedye-doped polymer optical fibers", J. Opt. Soc. Am. B, vol. 16, no. 10, pp. 1756-1767 (1999). Dazu wurde die Lichtintensität am Ende der Faser in Abhängigkeit des Abstands einer kalt weißen LED vom Detektor bestimmt, die als Lichtquelle fungiert. Der schematische Aufbau ist in Figur 4 gezeigt. Als Detektor wurde ein Photodetektor (Thorlabs APD120A2) und als Lichtquelle eine kalt-weiße LED-Lichtquelle verwendet.

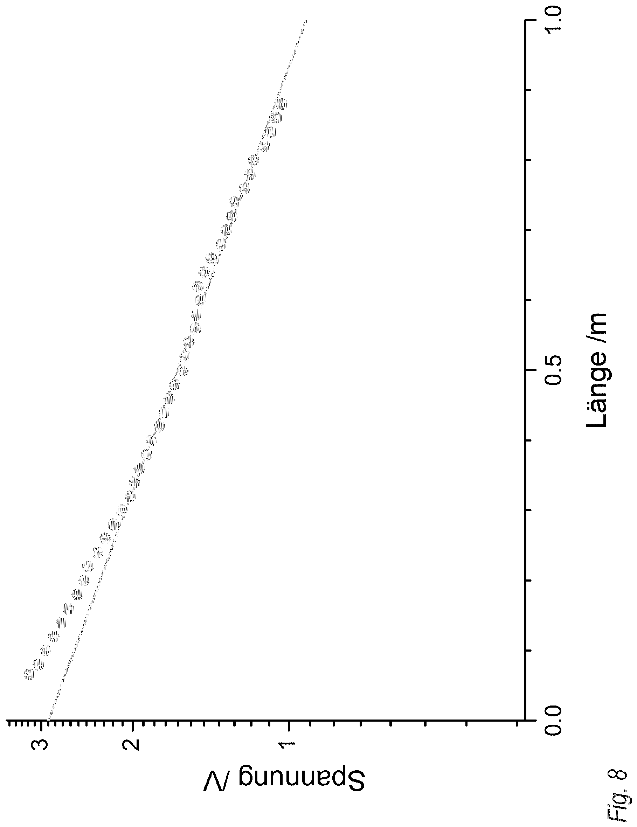

Die an der so hergestellten Lichtleitfaser F15_013 ermittelten Messdaten für die Dämpfung sind in Figur 8 gezeigt. Nach monoexponentiellem Fit der Daten zwischen 30 cm und 90 cm ergab sich eine Dämpfung $\alpha \approx$ (5,0 +/- 0,2) dB m$^{-1}$. Der Dämpfungsbelag $\alpha$' errechnet sich aus $\alpha$' nach: $\alpha = 4{,}343 * \alpha' = 10/L * \log(P_0/P_L)$. Die Ergebnisse sind in der nachfolgenden Tabelle 1 zusammengefasst.

Tabelle 1:

| Modell | Exponentiell | ermittelter Wert | Standardabweichung |
|---|---|---|---|
| Gleichung | $P_L = P_0 * e^{-\alpha' * x}$ | | |
| Chi-Quadrat Reduziert | 0,000723508 | | |
| Kor. R-Quadrat | 0,9923 | | |
| | $P_0$ | 2,92164 | 0,03092 |
| | $\alpha'$ | 1,15108 | 0,01929 |

Diese Messdaten sind bereits besser als die Messdaten einer konventionellen fluoreszierenden optischen Faser aus PS/PMMA (P/N 81 0083 von Industrial Fiberoptics, Inc., USA), deren Dämpfungsbelag bei identischer Auswertung wie oben beschreiben $\alpha \approx$ (5,1 +/- 0,2) dB m$^{-1}$ beträgt. Die Ergebnisse sind in der nachfolgenden Tabelle 2 zusammengefasst.

Tabelle 2:

| Modell | Exponentiell | ermittelter Wert | Standardabweichung |
|---|---|---|---|
| Gleichung | $P_L = P_0 * e^{-\alpha'*x}$ | | |
| Chi-Quadrat Reduziert | 0,000112777 | | |
| Kor. R-Quadrat | 0,98831 | | |
| | $P_0$ | 0,82831 | 0,02218 |
| | $\alpha'$ | 1,17448 | 0,05547 |

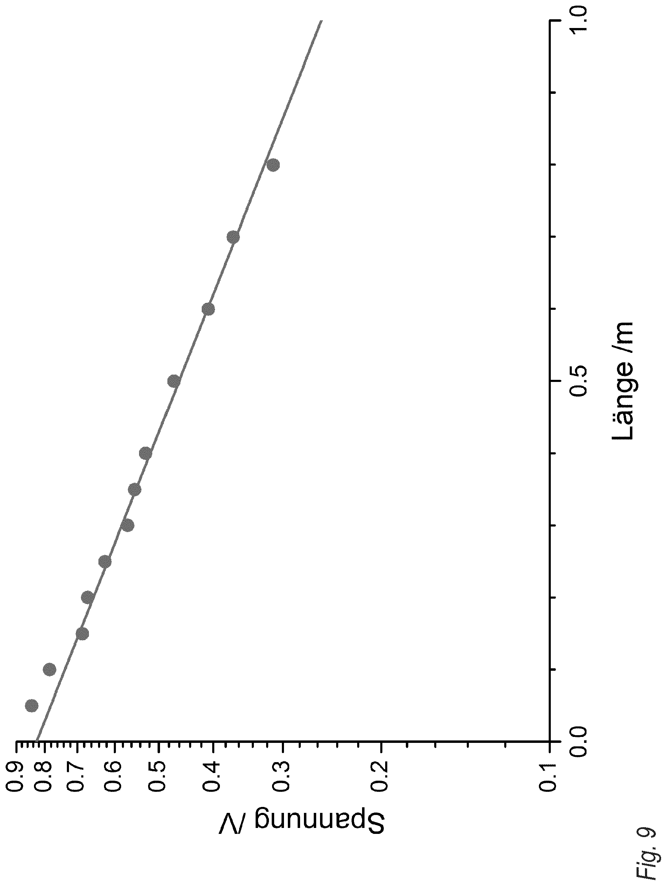

Die Ergebnisse der Dämpfungsmessungen an dieser Faser sind in Figur 9 dargestellt. Zu bedenken ist dabei, dass die Materialdämpfung von undotiertem Silikon bereits weitaus höher ist als die von PS/PMMA. Dass die Dämpfungswerte der gemäß Beispiel 2 hergestellten Faser trotz des an sich stärker absorbierenden Silikons bereits besser sind als die Dämpfungswerte der kommerziellen Faser aus PS/PMMA wird auf die hohe Güte der Grenzschicht zwischen dem Faserkern und dem Fasermantel zurückgeführt.

Da die Faser gemäß dem Beispiel 2 von außen nach innen hergestellt wurde, bildet sich eine aufgrund der Oberflächenspannung sehr glatte innere Wand des Fasermantels heraus, die innerhalb des Fasermantels bei der weiteren Herstellung geschützt bleibt. Dadurch bildet sich beim nachträglichen Befüllen mit dem Material der Faserkern eine sehr saubere Grenzfläche zwischen Faserkern und Fasermantel heraus. Insbesondere unterliegt diese Grenzschicht nicht den mechanischen Einwirkungen, die beispielsweise beim Extrudieren eines Faserkerns auftreten.

**Beispiel 3: Herstellung einer funktionalisierten Multistufenindex aus Silikon mittels Temperaturvernetzung, 1. Cladding RT601, 2. Cladding RTV655 + 50ppm Farbstoff F4, Faserkern OE6636. interne Bezeichnung: F14_1)**

Wacker RT601 A+B wurde im Verhältnis 9:1 gemischt und im Hochvakuum von Lufteinschlüssen befreit. Anschließend wurden 5 g RT601 in einer 10ml Spritze aufgezogen und 3 ml in einen senkrecht hängenden und 1,5 m langen PTFE Schlauch (Carl Roth, Deutschland) mit 2 mm Innendurchmesser gegeben. Nach Absinken der flüssigen Silikonsäule im PTFE Schlauch, war der Schlauch im Inneren von RT601 benetzt (Schichtdicke ca. 0,2 mm). Das Silikon wurde bei Raumtemperatur über 4 Stunden vernetzt, bevor die zweite Claddingschicht inklusive Fluoreszenzfarbstoff aufgebracht wurde. Dazu wurden 5g Momentive RTV655 (Mischung der Komponenten A:B im Verhältnis 1:10) mit 50 ppm eines grünem Fluoreszenzfarbstoff F4 dotiert und analog zum vorherigen Schritt verfahren. Die Aushärtung der 2. Claddingschicht erfolgte bei Raumtemperatur über 16 h. Im letzten Schritt wurde der verbleibende Hohlraum mit gefilterten vorgemischten OE6636 Silikon (Mischung der Komponenten A:B im Verhältnis 1:2) aufgefüllt, beide Enden des Schlauches verschlossen und das Faserkernmaterial je 2 h bei 80°C, 100°C und 120°C vernetzt. Anschließend wurde der PTFE Schlauch entfernt, wodurch eine komplett aus Silikon bestehende fluoreszierende elastomere optische Lichtleitfaser (interne Bezeichnung F14_1) von 1,08 m Länge zurück blieb.

Figur 6 zeigt eine Mikroskopieaufnahme der Endfläche von F14_1: 2 mm Durchmesser, Faserkernmaterial undotiert OE6636, 50 ppm Farbstoff F4 im Fasermantelmaterial RTV655, 2. Fasermantelmaterial RT 601 undotiert.

**Beispiel 4: Herstellung einer funktionalisierten Stufenindexfaser aus NOA durch UV-Vernetzung**

NOA 85 wurde in einer 10 ml Spritze aufgezogen und 2 ml in einen senkrecht hängenden und 1,5 m langen FEP oder PTFE Schlauch (Carl Roth, Deutschland) mit 2 mm Innendurchmesser gegeben. Nach Absinken der Flüssigkeitssäule, wurde der Schlauch seitlich mit einer UV LED-Taschenlampe ($\lambda_{max}$ = 365 nm) bestrahlt. Die LED wurde um 15 cm pro Minute entlang des Schlauchs verschoben. Anschließend wurde der Schlauch mit dem höherbrechenden NOA 65 (dotiert mit 50 ppm F4) aufgefüllt und über einen Zeitraum von 30 min mit der UV LED bestrahlt. Das ausgehärtete Material wurde aus dem Schlauch entnommen. Die Nutzung von UV-aushärtbarem Material eröffnet die Möglich, beliebige Faserlängen herzustellen, da die Vernetzung durch UV Licht initiiert wird und daher keine "Topfzeit" des Materials beschränkend wirkt.

**Beispiel 5: Opferschicht**

Es wurde wie in Beispiel 1 verfahren. Es wurde jedoch ein Schlauch aus Polyvinylalkohohl als Stützschlauch verwendet, der eigens für diese Herstellungsform extrudiert wurde. Zum Entformen wurde der Schlauch in heißes Wasser (60°C) gelegt. Innerhalb von 2 h löste sich der Schlauch auf und zurück blieb die elastomere optische Faser. Diese wurde erneut mit destilliertem Wasser und Ethanol gewaschen und anschließend bei 100°C im Trockenschrank über 1h getrocknet.

**Vergleichsbeispiel 6: Faseraufbau von Innen nach Außen, interne Bezeichnung F15 026**

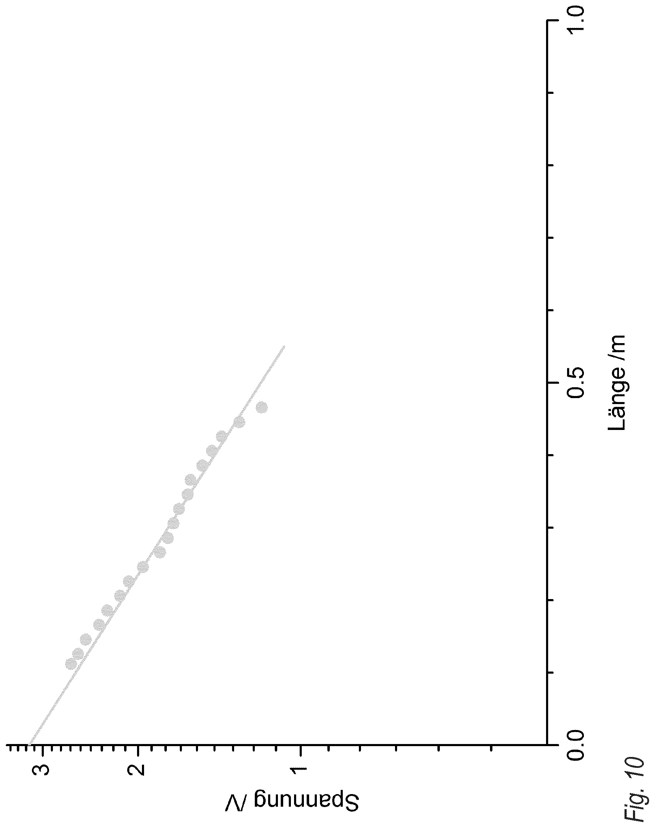

Das Vergleichsbeispiel befasst sich mit einer von innen nach außen hergestellten Faser, nach konventioneller Vorgehensweise. Als Faserkernmaterial wurden, wie bei Beispiel 2, 10 g der Siloxanmischung OE6636, die mit 50 ppm grünem Fluoreszenzfarbstoff F4 versetzt wurde, verwendet und in einen FEP-Schlauch gefüllt und anschließend je 2h bei 80°C, 100°C und 120°C vernetzt. Anschließend wurde der Schlauch entfernt. Die Faser wurde anschließend mit gefiltertem Ethanol gereinigt und zur Bildung des Fasermantels mit 10 g Wacker RT601 beschichtet (durch dip-coating). Das Silikon wurde bei Raumtemperatur vernetzt, bevor die Faser (interne Bezeichnung F15_026) vermessen wurde.
Diese Messungen ergaben eine einen Dämpfung $\alpha_{tot} \approx (9,2$ +/- $0,4)$ dB m$^{-1}$. Die um über 4 dB m$^{-1}$ erhöhte Dämpfung der von innen nach außen hergestellten Faser F15_026 entspricht einem Intensitätsverlust von über 66 % nach einem Meter gegenüber der nach dem hier beschriebenen Verfahren (von außen nach innen) hergestellten Faser F15_013. Die Ergebnisse sind in der nachfolgenden Tabelle 3 zusammengefasst und in Figur 10 gezeigt.

Tabelle 3:

| Modell | Exponentiell | ermittelter Wert | Standardabweichung |
|---|---|---|---|
| Gleichung | $P_L = P_0 * e^{-\alpha' * x}$ | | |
| Chi-Quadrat Reduziert | 0,0019 | | |
| Kor. R-Quadrat | 0,94137 | | |
| | $P_0$ | 3,37369 | 0,24191 |
| | $\alpha'$ | 2,11885 | 0,18957 |

Aus dem Vergleich der Dämpfungsmessungen von Vergleichsbeispiel 6 und Beispiel 2 ist erkennbar, dass bei ansonsten gleichen Materialien für den Faserkern und Fasermantel eine Herstellung der Fasern von außen nach innen, d.h. gemäß den hier beschriebenen Ausführungsformen, zu deutlich geringeren Dämpfungswerten führt als der konventionelle Aufbau von innen nach außen. Als wesentlicher Vorteil wird hier die gute Qualität der Grenzfläche zwischen Faserkern und Fasermantel angesehen.

**Messung der Oberflächenraugigkeit der inneren Oberfläche des Fasermantels**

Die hohe Güte bei der Herstellung der inneren Oberfläche des Fasermantels wurde auch durch Messungen der Oberflächenrauhigkeit bestätigt. Dabei wurde die Oberfläche des Fasermantels (zur Untersuchung der Oberflächenrauhigkeit der optisch relevanten Schicht Faserkern-Fasermantel Grenzfläche.) mit einem in einer UV-aktivierbaren Thiol-Ene-Reaktion vernetzendem Elastomers als Kernmaterial abgeformt (NOA 65). Dieses Material geht keine kovalente Bindung mit dem Silikon ein, weshalb die Silikonschicht einfach entfernt werden kann und die Oberflächenrauhigkeit des so erhaltenen Kerns als Abform der inneren Oberfläche des Fasermantels bestimmt werden kann.

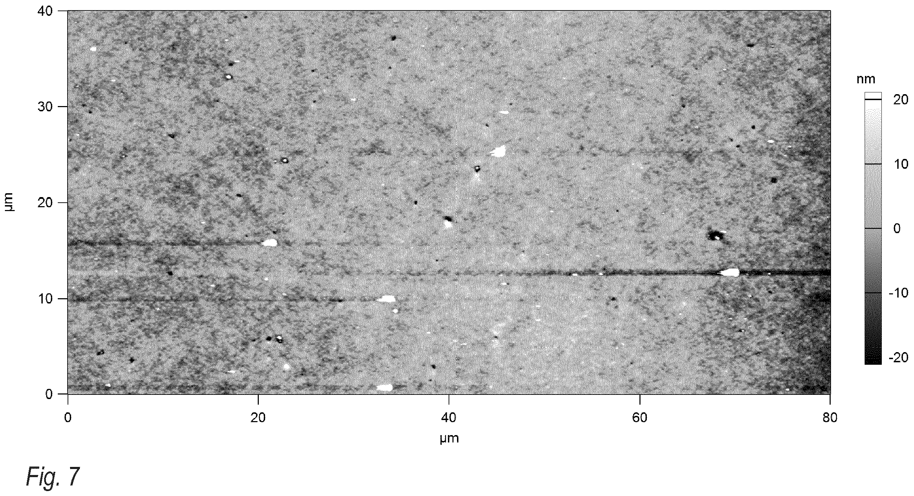

Figur 7 zeigt eine AFM- Aufnahme der erhaltenen Kernoberfläche (Abform der inneren Oberfläche des Fasermantels). Die hellen Erhebungen stellen Staubpartikel dar, die bei der Präparation bzw. Messung auf die Oberfläche gelangt sind.
Die arithmetische Rauhigkeit der Oberfläche (inklusive des während der Messung eingebrachten Staubs) beläuft sich auf $R_a \approx 3,3$ nm. Die Rauhigkeit der Oberfläche des FEP-Schlauches (fluoriertes ethylene propylene polymer) beträgt laut Literaturangabe $R_a = 11,2$ nm (T.A.C. Flipsen et al., "Polymer Optical Fiber with High Thermal Stability and Low Optical Loss Based on Novel Densely Crosslinked Polycarbosiloxanes", Journal of Applied Polymer Science, Band 67, Seiten 2223-2230 (1998)). Erkennbar ist, dass die Oberflächenrauhigkeit bei der hier vorgestellten Herangesehensweise deutlich geringer ist. Die optische Güte is daher deutlich verbessert.
Bei der standardmäßigen Herstellungsmethode wird der FEP-Schlauch als Stempel benutzt. D.h. dieser gibt die Rauhigkeit und damit Güte der optisch relevanten Faserkern/Fasermantel-Grenzfläche wieder. Die hier vorgestellte Herstellungsmethode führt zu einer "glatteren" optischen Oberfläche, obwohl ebenfalls der FEP Schlauch verwendet wurde, jedoch nur als äußerer Stützschlauch. Die Güte der Grenzfläche ist daher unabhängig von der Oberflächenqualität des Stützschlauchs, da sie sich aufgrund der Oberflächenspannung ungestört innerhalb des Stützschlauches ausbildet.

Die arithmetische Rauigkeit $R_a$ ermittelt sich als Summe aller Messpunkte $z_i$ von n=0 bis n gemäß

$$R_a = \frac{1}{n}\sum_{i=0}^{n}|z_i - \overline{z}|$$

mit $\overline{z}$ dem Mittelwert

$$\overline{z} = \frac{1}{n}\sum_{i=0}^{n}z_i$$

und $z_i$ die jeweils gemessene Höheninformation.

Mittels der hier beschriebenen Lichtwellenleiter ist es möglich, Bauelemente herzustellen, die ein Trägermaterial und einen in das Trägermaterial eingebetteten elastomeren Lichtwellenleiter aufweisen.

Es ist ebenfalls möglich, Hochspannungsbauelemente umfassend ein Isolationsmaterial und einen in das Isolationsmaterial eingebetteten elastomeren Lichtwellenleiter herzustellen.

Die Lichtwellenleiter dienen dabei der zerstörungsfreien Prüfung der Funktionsfähigkeit der Bauelemente oder Hochspannungsbauelemente. Beispielsweise kommt es im Fall eines sich andeutenden Schadens der Hochspannungsbauelemente zum Entstehen von Teilentladungen im Isolationsmaterial. Während dieser Teilentladung wird "Licht" im Wellenlängenbereich von ca. 300-700 nm ausgesandt. Dieses Licht kann von fluoreszenzfunktionalisierten Fasern erfasst und zu einer Detektoreinheit geleitet werden, wo die Bewertung des Signals erfolgt. Dadurch ist es möglich, Schäden relativ frühzeitig zu erkennen.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen, wie sie in den nachfolgenden Ansprüchen definiert ist.

**Bezugszeichenliste**

| | |
|---|---|
| 10 | Hohlkörper |
| 11 | Hohlkanal |
| 12 | Innenwand des Hohlkanals |
| 13 | erste Richtung |
| 14 | Rotationsachse |
| 20 | Fasermantel |
| 20a | Material zur Bildung des Fasermantels |
| 21 | erste Mantelschicht |
| 22 | zweite Mantelschicht |
| 29 | Hohlraum des Fasermantels |
| 30 | Faserkern |
| 100, 100a | Lichtwellenleiter / Lichtleitfaser |

**Patentansprüche**

**1.** Verfahren zur Herstellung von elastomeren Lichtwellenleitern, insbesondere von Lichtleitfasern, umfassend:

- Bereitstellen eines Hohlkörpers (10) mit mindestens einem, sich entlang einer ersten Richtung (13) erstreckenden Hohlkanal (11);
- Ausbilden eines Fasermantels (20, 21, 22) in dem Hohlkanal (11) durch Beschichten der Innenwand (12) des Hohlkanals (11) mit mindestens einer ersten unvernetzten, fließfähigen Elastomermischung, insbesondere einer ersten Silikonelastomermischung, unter Einwirkung einer in die erste Richtung wirkenden Kraft, wobei ein Hohlraum (29) verbleibt, der von dem Fasermantel (20, 21, 22) umgeben ist, und zumindest teilweises Aushärten der Elastomermischung;
- Ausbilden eines Faserkerns (30) in dem Hohlraum (29) durch Füllen des Hohlraums (29) mit einer weiteren unvernetzten, fließfähigen Elastomermischung, insbesondere einer weiteren Silikonelastomermischung; und
- Ausbilden eines Lichtwellenleiters (100) aufweisend den Fasermantel (20, 21, 22) und den Faserkern (30) durch Aushärten des Fasermantels (20, 21, 22) und des Faserkerns (30) in dem Hohlkörper (10).

2. Verfahren nach Anspruch 1, wobei die in die erste Richtung wirkende Kraft durch die auf die erste fließfähige Elastomermischung wirkende Schwerkraft erzeugt wird, wobei der Hohlkörper (10) dabei so gehalten wird, dass die Schwerkraft parallel zur ersten Richtung (13) verläuft.

3. Verfahren nach Anspruch 1 oder 2, wobei die in die erste Richtung (13) wirkende Kraft entweder durch Erzeugen eines Unterdrucks erzeugt wird, welcher an einem Ende des Hohlkanals (11) angelegt wird, oder durch Erzeugen eines Überdrucks, welcher am anderen Ende des Hohlkanals (11) angelegt wird.

4. Verfahren nach einem der Ansprüche 1 bis 3, wobei das Ausbilden des Fasermantels (20) umfasst:

- Beschichten der Innenwand (12) des Hohlkanals (11) mit der ersten unvernetzten, fließfähigen Elastomermischung unter Einwirkung einer in die erste Richtung (13) wirkenden Kraft zur Ausbildung einer ersten Mantelschicht (21), wobei ein Hohlraum (29) verbleibt, der von der ersten Mantelschicht (21) umgeben ist; und
- Beschichten der Innenwand der ersten Mantelschicht (21) mit mindestens einer zweiten unvernetzten, fließfähigen Elastomermischung unter Einwirkung einer in die erste Richtung (13) wirkenden Kraft zur Ausbildung mindestens einer zweiten Mantelschicht (22), wobei ein Hohlraum (29) verbleibt, der von der ersten und zweiten Mantelschicht (21, 22) umgeben ist.

5. Verfahren nach Anspruch 4, wobei

- die erste und die zweite Elastomermischungen unterschiedliche Viskositäten aufweisen, und/oder
- wobei die erste und die zweite Elastomermischungen unterschiedliche Polymere und/oder Oligomere und/oder Dimere und/oder Monomere enthalten.

6. Verfahren nach einem der Ansprüche 1 bis 5, wobei die erste Elastomermischung und/oder die zweite Elastomermischung und/oder die weitere Elastomermischung Polymere und/oder Oligomere und/oder Dimere und/oder Monomere enthält oder enthalten, welche reaktive Gruppen für eine Polyaddition der Polymere und/oder Oligomere und/oder Dimere und/oder Monomere aufweisen.

7. Verfahren nach Anspruch 6, wobei die Polymere und/oder Oligomere und/oder Dimere und/oder Monomere mit einem oder mehreren Nachweismolekülen funktionalisiert sind.

8. Verfahren nach einem der Ansprüche 1 bis 7, wobei nach der Bildung des Fasermantels (20, 21, 22) und/oder nach Bildung jeder einzelnen Mantelschicht (21, 22), eine Temperaturbehandlung durchgeführt wird.

9. Verfahren nach einem der Ansprüche 1 bis 8, weiter umfassend:

- Auflösen und/oder Auftrennen des Hohlkörpers (10) und Entnahme des Lichtwellenleiters.

10. Verfahren nach einem der Ansprüche 1 bis 9, weiter umfassend:

- Ausbildung einer Oberflächenbeschichtung auf der Innenwand (12) des Hohlkanals (11) unter Einwirkung einer in die erste Richtung (13) wirkenden Kraft aus einer additionsvernetzenden oder vorzugsweise kondensationsvernetzenden Elastomermischung; und
- Passivierung der Oberflächenbeschichtung durch Absättigung verbleibender oberflächlichen-reaktiver Gruppen.

11. Elastomerer Lichtwellenleiter, insbesondere elastomere Lichtleitfaser, aufweisend:

- mindestens einen Faserkern (30) aus einem elastomeren Material; und

- mindestens einen Fasermantel (20) aus einem elastomeren Material,
- wobei das elastomere Material des Faserkerns (30) mit kovalent gekoppelten Fluoreszenz- oder Phosphoreszenzfarbstoffen funktionalisiert ist und die kovalent gekoppelten Fluoreszenz- oder Phosphoreszenzfarbstoffe im elastomeren Material des Faserkerns kovalent gebunden sind.

12. Elastomerer Lichtwellenleiter nach Anspruch 11, wobei das elastomere Material des Faserkerns (30) und/oder des Fasermantels (20) ein Silikonelastomer ist, insbesondere herstellbar durch eine UV-aktivierbare Thiol-Ene-Reaktion.

13. Elastomerer Lichtwellenleiter nach Anspruch 11 oder 12, wobei das elastomere Material des Faserkerns (30) mit Nachweismolekülen umfassend Gas-sensitive Farbstoffe und/oder Szintillatorstoffe funktionalisiert ist, und/oder wobei das elastomere Material des Fasermantels (20) mit Nachweismolekülen umfassend Fluoreszenzfarbstoffe und/oder Gas-sensitive Farbstoffe und/oder Szintillatorstoffe funktionalisiert ist.

**Claims**

1. A method for producing elastomer optical waveguides, in particular made of optical fibers, comprising:

    - providing a hollow body (10) with at least one hollow channel (11) extending along a first direction (13);
    - forming a fiber sheath (20, 21, 22) in the hollow channel (11) by coating the inner wall (12) of the hollow channel (11) with at least a first uncured, flowable elastomer mixture, in particular a first silicone-elastomer mixture, under the effect of a force acting in the first direction, wherein a hollow chamber (29) remains that is surrounded by the fiber sheath (20, 21, 22), and at least partial curing of the elastomer mixture;
    - forming a fiber core (30) in the hollow chamber (29) by filling the hollow chamber (29) with another uncured, flowable elastomer mixture, in particular another silicone-elastomer mixture; and,
    - forming an optical waveguide (100) comprising the fiber sheath (20, 21, 22) and the fiber core (30) by curing of the fiber sheath (20, 21, 22) and of the fiber core (30) in the hollow body (10).

2. The method according to claim 1, wherein the force acting in the first direction is produced by the gravity acting on the first flowable elastomer mixture, wherein the hollow body (10) is held such that gravity runs parallel to the first direction (13).

3. The method according to claim 1 or 2, wherein the force acting in the first direction (13) is produced either by producing a negative pressure that is applied to an end of the hollow chamber (11) or by producing an overpressure that is applied to the other end of the hollow chamber (11).

4. The method according to any of claims 1 through 3, wherein the forming of the fiber core (20) comprises:

    - coating the inner wall (12) of the hollow channel (11) with the first uncured, flowable elastomer mixture, under the effect of a force acting in the first direction (13) for forming a first sheath layer (21), wherein a hollow chamber (29) remains that is surrounded by the first sheath layer (21); and
    - coating the inner wall of the first sheath layer (21) with at least a second uncured, flowable elastomer mixture, under the effect of a force acting in the first direction (13) for forming at least a second sheath layer (22), wherein a hollow chamber (29) remains that is surrounded by the first and second sheath layers (21, 22).

5. The method according to claim 4, wherein:

    - the first and the second elastomer mixtures have different viscosities, and/or,
    - wherein the first and the second elastomer mixtures include different polymers and/or oligomers and/or dimers and/or monomers.

6. The method according to any of claims 1 through 5, wherein the first elastomer mixture and/or the second elastomer mixture and/or the further elastomer mixture includes or include polymers and/or oligomers and/or dimers and/or monomers that have reactive groups for a polyaddition of the polymers and/or oligomers and/or dimers and/or monomers.

7. The method according to claim 6, wherein the polymers and/or oligomers and/or dimers and/or monomers are functionalized with one or a plurality of detection molecules.

8. The method according to any of claims 1 through 7, wherein, following the formation of the fiber sheath (20, 21, 22) and/or following formation of each individual sheath layer (21, 22), a temperature treatment is conducted.

9. The method according to any of claims 1 through 8, further comprising:

- dissolving or separating the hollow body (10), and removing the optical waveguide.

10. The method according to any of claims 1 through 9, further comprising:

- forming a surface coating on the inner wall (12) of the hollow channel (11), under the effect of a force acting in the first direction (13), from an addition-curing or preferably condensation-curing elastomer mixture; and,
- passivating the surface coating by saturating remaining surface-reactive groups.

11. An elastomeric optical waveguide, in particular an elastomer optical fiber, comprising:

- at least one fiber core (30) made of an elastomeric material; and,
- at least one fiber sheath (20) made of an elastomeric material,

wherein the elastomeric material of the fiber core (30) is functionalized with covalently coupled fluorescence or phosphorescence dyes and the covalently coupled fluorescence or phosphorescence dyes are covalently bonded in the elastomeric material of the fiber core.

12. The elastomeric optical waveguide according to claim 11, wherein the elastomeric material of the fiber core (30) and/or of the fiber sheath (20) is a silicone elastomer, in particular a silicone elastomer that can be produced using a UV-activatable thiol-ene reaction.

13. The elastomeric optical wave guide according to claim 11 or 12, wherein the elastomeric material of the fiber core (30) is functionalized with detection molecules comprising gas-sensitive dyes and/or scintillator substances, and/or wherein the elastomeric material of the fiber sheath (20) is functionalized with detection molecules comprising fluorescence dyes and/or gas-sensitive dyes and/or are fluorescence dyes and/or gas-sensitive dyes and/or scintillator substances.

**Revendications**

1. Procédé de fabrication de guides d'ondes optiques élastomères, en particulier de fibres optiques, comprenant :

- la fourniture d'un corps creux (10) ayant au moins un canal creux (11) s'étendant le long d'une première direction (13) ;
- réalisation d'une gaine de fibre (20, 21, 22) dans le canal creux (11) par revêtement de la paroi intérieure (12) du canal creux (11) avec au moins un premier mélange d'élastomères fluide non réticulé, en particulier d'un premier mélange d'élastomères siliconés, sous l'action d'une première force agissant dans la première direction, en laissant un espace creux (29), qui est entouré de la gaine de fibre (20, 21, 22), et durcissement au moins partiel du mélange d'élastomères ;
- réalisation d'un cœur de fibre (30) dans l'espace creux (29) par un remplissage de l'espace creux (29) avec un mélange d'élastomères fluide non réticulé supplémentaire, en particulier un mélange supplémentaire d'élastomères siliconés ; et
- réalisation d'un guide d'ondes optique (100) comportant la gaine de fibre (20, 21, 22) et le cœur de fibre (30) par durcissement de la gaine de fibre (20, 21, 22) et du cœur de fibre (30) dans le corps creux (10).

2. Procédé selon la revendication 1, dans lequel la force agissant dans la première direction est produite par la force de gravité agissant à travers le premier mélange d'élastomères fluide, le corps creux (10) étant alors maintenu de telle sorte que la force de gravité soit parallèle à la première direction (13).

3. Procédé selon la revendication 1 ou 2, dans lequel la force agissant dans la première direction (13) est produite soit par production d'une dépression qui est appliquée à une extrémité du canal creux (11), soit par production d'une surpression, qui est appliquée à l'autre extrémité du canal creux (11).

**4.** Procédé selon l'une des revendications 1 à 3, dans lequel la réalisation de la gaine de fibre (20) comprend :

- le revêtement de la paroi intérieure (12) du canal creux (11) avec le premier mélange d'élastomères fluide non réticulé sous l'action d'une force agissant dans la première direction (13) pour réaliser une première couche de gaine (21), en laissant un espace creux (29) qui est entouré par la première couche de gaine (21); et
- le revêtement de la paroi intérieure de la première couche de gaine (21) avec au moins un second mélange d'élastomères fluide non réticulé sous l'action d'une force agissant dans la première direction (13) pour la réalisation d'au moins une seconde couche de gaine (22), en laissant un espace creux (29) qui est entouré par la première et la seconde couche de gaine (21, 22).

**5.** Procédé selon la revendication 4, dans lequel

- le premier et le second mélanges d'élastomères présentent des viscosités différentes, et/ou
- le premier et le second mélanges d'élastomères contiennent des polymères et/ou des oligomères et/ou des dimères et/ou des monomères différents.

**6.** Procédé selon l'une des revendications 1 à 5, dans lequel le premier mélange d'élastomères et/ou le second mélange d'élastomères et/ou le mélange d'élastomères supplémentaire contiennent des polymères et/ou des oligomères et/ou des dimères et/ou des monomères, qui comprennent des groupes réactifs pour une polyaddition des polymères et/ou des oligomères et/ou des dimères et/ou des monomères.

**7.** Procédé selon la revendication 6, dans lequel les polymères et/ou les oligomères et/ou les dimères et/ou les monomères sont fonctionnalisés avec une ou plusieurs molécules de détection.

**8.** Procédé selon l'une des revendications 1 à 7, dans lequel, après la formation de la gaine de fibre (20, 21, 22) et/ou après la formation de chaque couche de gaine individuelle (21, 22), on procède à un traitement thermique.

**9.** Procédé selon l'une des revendications 1 à 8, comprenant en outre :

- la dissolution et/ou la séparation du corps creux (10) et l'extraction du guide d'ondes optique.

**10.** Procédé selon l'une des revendications 1 à 9, comprenant en outre :

- la réalisation d'un revêtement superficiel sur la paroi intérieure (12) du canal creux (11) sous l'action d'une force agissant dans la première direction (13), à partir d'un mélange d'élastomères réticulable par addition ou de préférence réticulable par condensation ; et
- la passivation du revêtement superficiel par saturation des groupes restants à réactivité superficielle.

**11.** Guide d'ondes optique élastomère, en particulier fibre optique élastomère, comprenant :

- au moins un cœur de fibre (30) en un matériau élastomère ; et
- au moins une gaine de fibre (20) en un matériau élastomère,
- le matériau élastomère du cœur de fibre (30) étant fonctionnalisé avec des colorants fluorescents ou phosphorescents à couplage covalent, et les colorants fluorescents ou phosphorescents à couplage covalent étant liés par liaison covalente dans le matériau élastomère du cœur de fibre.

**12.** Guide d'ondes optique élastomère selon la revendication 11, dans lequel le matériau élastomère du cœur de fibre (30) et/ou de la gaine de fibre (20) est un élastomère siliconé, pouvant être fabriqué en particulier par une réaction thiolène activable par les UV.

**13.** Guide d'ondes optique élastomère selon la revendication 11 ou 12, dans lequel le matériau élastomère du cœur de fibre (30) est fonctionnalisé avec des molécules de détection comprenant des colorants sensibles au gaz et/ou des substances scintillantes, et/ou dans lequel le matériau élastomère de la gaine de la fibre (20) est fonctionnalisé avec des molécules de détection comprenant des colorants de fluorescence et/ou des colorants sensibles au gaz et/ou des substances scintillantes.

Fig. 1A

Fig. 1B

Fig. 1C

Fig. 1D

Fig. 1E

Fig. 2A    Fig. 2B    Fig. 2C    Fig. 2D    Fig. 2E

Fig. 3

LED-Lichtquelle

Detektor

F-POF

*Fig. 4*

*Fig. 5A*

*Fig. 5B*

*Fig. 6*

*Fig. 7*

Fig. 8

Fig. 9

EP 3 001 101 B1

*Fig. 10*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4999141 A
- EP 1116577 A2
- US 20090129736 A1
- US 4919513 A
- DE 10145945 A1
- EP 2472688 A2
- US 20020186921 A1
- US 4867531 A
- JP H01319003 A
- US 4746751 A
- US 20100280184 A1

**In der Beschreibung aufgeführte Nicht-Patentliteratur**

- **T.A.C. FLIPSEN et al.** Polymer Optical Fiber with High Thermal Stability and Low Optical Loss Based on Novel Densely Crosslinked Polycarbosiloxanes. *Journal of Applied Polymer Science,* 1998, vol. 67, 2223-2230
- Dye-doped polysiloxane rubbers for luminescent solar concentrator systems. *Optical Materials,* vol. 34, 1219-1224
- **KRUHLAK, R.J. ; KUZYK, M.G.** Side-illumination fluorescence spectroscopy. II. Applications to squarainedye-doped polymer optical fibers. *J. Opt. Soc. Am. B,* 1999, vol. 16 (10), 1756-1767